# FASCICULE DE BREVET EUROPEEN

(11) **EP 1 208 684 B1**
(45) Date de publication et mention de la délivrance du brevet: **08.11.2006**
(21) Numéro de dépôt: 01907760.1
(22) Date de dépôt: 09.02.2001
(51) Int. Cl.: H04L 29/06

(54) **PROCEDE DE TRANSMISSION DE FLUX DE DONNEES A HAUT DEBIT SUR UN RESEAU DE TYPE INTERNET ENTRE UN SERVEUR ET UN TERMINAL A CARTE A PUCE**
VERFAHREN ZUR ÜBERTRAGUNG VON HOCHRÄTIGEN DATENSTRÖMEN ÜBER INTERNET ZWISCHEN EINEM SERVER UND EINEM CHIPKARTENTERMINAL
METHOD FOR HIGH RATE DATA FLOW TRANSMISSION ON AN INTERNET-TYPE NETWORK BETWEEN A SERVER AND A SMART CARD TERMINAL, IN PARTICULAR A MULTIMEDIA DATA FLOW

(30) Priorité: 10.02.2000 FR 0001665
(43) Date de publication de la demande: 29.05.2002
(73) Titulaire: CP8 TECHNOLOGIES, 78431 Louveciennes (FR)
(72) Inventeur: URIEN, Pascal, F-78450 Villepreux (FR)
(74) Mandataire: Cassagne, Philippe M.J.
(86) Numéro de dépôt international: PCT/FR2001/000394
(87) Numéro de publication internationale: WO 2001/060040

(56) Documents cités:
- WO-A-98/19237
- GB-A- 2 326 010
- GB-A- 2 332 288

## Description

L'invention concerne un procédé de transmission de flux de données à haut débit sur un réseau de type Internet entre un serveur et un terminal à carte à puce.

L'invention s'applique plus particulièrement à un flux de données multimédia sécurisé.

Dans le cadre de l'invention, le terme "haut débit" concerne des flux de données dont le débit est typiquement de l'ordre de 100 kbits par seconde ou plus. A titre d'exemple, un fichier audio de données codées en "MP3" nécessite un espace mémoire de 1 MO pour une minute d'enregistrement, soit environ 100 kbits/sec., lorsque ce fichier est transmis par un canal numérique pour être diffusé en temps réel. On peut citer également des flux de données vidéo qui nécessitent une vitesse de transmission de l'ordre de 2 Mbits/sec pour être affichés en temps réel. C'est, *a fortiori,* aussi le cas de flux de données dits multimédias qui peuvent véhiculer à la fois des images, de la vidéo et/ou des sons.

Toujours dans le cadre de l'invention, le terme "terminal à carte à puce" doit être compris dans un sens général. Il peut notamment être constitué par un ordinateur personnel fonctionnant sous divers systèmes d'exploitation, tels WINDOWS ou UNIX (tous deux étant des marques déposées). Il peut être aussi constitué par une station de travail, ou un ordinateur portable.

De même, dans le cadre de l'invention, le terme "réseau Internet" englobe, outre le réseau Internet proprement dit, les réseaux privés d'entreprises ou similaires, du type dit "intranet", et les réseaux les prolongeant vers l'extérieur, du type dit "extranet", et de façon générale tout réseau dans lequel les échanges de données s'effectuent selon un protocole du type Internet.

Pour fixer les idées, on se placera dans ce qui suit dans le cas de l'application préférée de l'invention, sans en limiter la portée en quoi que ce soit, à savoir la transmission d'un flux de données multimédias sécurisées, sauf mention contraire.

Par "sécurisé", on entend le fait que les données en question sont chiffrées, en tout ou partie, pour en assurer la confidentialité, ou pour le moins qu'on ne peut y accéder librement. Il peut s'agir, dans ce dernier cas, de données à accès payant. Dans tous les cas, il est en général nécessaire de fournir des données d'identification (mot de passe, identifiant ou "login", N° de carte de crédit, etc.) qui permettent une transaction en vue de l'obtention des données désirées (fichier multimédia par exemple). Ces données sont dites "sensibles" et ne peuvent être transmises en "clair" sur le réseau Internet. Elles doivent donc être sécurisées : chiffrage ou utilisation d'un protocole sécurisé, par exemple du type "SSL" (pour Secure Socket Layer").

Avec l'essor très rapide du réseau Internet, un premier besoin se fait sentir de pouvoir transmettre par ce réseau toutes sortes de fichiers numériques, à partir de/ou vers divers systèmes serveurs et/ou clients. Lorsque la bande passante de la voie de transmission, ou d'une portion de cette voie de transmission reliant ces deux systèmes est faible (c'est le cas, par exemple, des lignes téléphoniques du type dit commuté, limitées à environ 56 kbits/sec. lorsqu'on met en oeuvre le standard V90), des fichiers volumineux peuvent être certes transmis par ces lignes de transmission, mais ne peuvent être utilisés dans la majorité des cas qu'après complet téléchargement et non en temps réel. La disponibilité de voies de communication rapides (réseau numérique à intégration de service "RNIS", ou "ISDN" selon la terminologie anglo-saxonne, câble ou liaisons par satellite) permet d'envisager la diffusion en temps réel de fichiers audio, voire multimédias, par un terminal connecté au réseau Internet. Même une ligne téléphonique classique, lorsque l'on met en oeuvre une technologie de transmission récente connue sous le sigle "ADSL", permet de transmettre des données numériques à une vitesse de l'ordre de 1 Mbits/sec.

Or, historiquement, le canal de transmission entre un serveur éloigné et un terminal, tous deux connectés au réseau Internet, constituait "un goulot d'étranglement". Il est en effet clair que les systèmes informatiques aux deux bouts de la chaîne, serveurs et terminaux, peuvent accepter les débits de données nécessaires à la transmission et/ou au traitement et à la diffusion de fichiers multimédia. La mise en oeuvre récente de voies rapides sur le réseau Internet permet donc ce type de traitement "de bout en bout".

Un autre besoin qui se fait sentir est l'utilisation de cartes à puce en association avec les terminaux.

En effet, dans un système d'applications à base de carte à puce, cette dernière peut se voir dévolues diverses fonctions, et notamment des fonctions de sécurité. Il est en effet avantageux de stocker les données liées à la sécurité (mots de passe, droits d'accès, etc.) dans une carte à puce qui peut être conservée par l'utilisateur. En outre, les données, étant enregistrées dans une mémoire fixe, sous une forme qui peut être chiffrée, elles ne sont pas facilement modifiables, ni même directement lisibles de l'extérieur.

Dans le cadre de transactions payantes, des fonctions similaires sont mises en oeuvre. Il est également nécessaire, comme il a été rappelé, de transmettre des mots de passe et/ou identifiants, ainsi que diverses données sensibles (N° de carte bancaire, etc.) et des données définissant les droits d'un utilisateur (abonnements en vigueur, services accessibles, etc.).

Il est cependant à noter que, dans l'art connu, la "fonction sécurité" ne peut pas être réalisée directement à l'intérieur de la carte à puce, car le flux de données, reçu et/ou transmis, ne la traverse pas. Il doit donc s'établir un dialogue entre le terminal et la carte à puce pour que les contrôles liés à la sécurité puissent s'effectuer. Ce mode opératoire dégrade le niveau de sécurité, voire permet l'introduction de "chevaux de Troie" dans le terminal, dans certaines conditions défavorables. Il serait donc nécessaire que les contrôles de sécurité s'effectuent *in situ,* c'est-à-dire dans la carte à puce elle-même, ce qui nécessiterait que le flux de données soit dévié par la carte à puce, avant d'être transmis au terminal.

En sus de la fonction "sécurité" qui lui est dévolue, il serait également intéressant que la carte à puce puisse contrôler directement certaines opérations qui se déroulent dans le terminal et puisse, par exemple, modifier des caractéristiques prédéterminées de données reçues et/ou transmises par le terminal.

Dans l'art connu, ces modes opératoires sont incompatibles avec les technologies actuellement disponibles et avec les normes retenues pour les applications à base de carte à puce, comme il va l'être montré ci-après.

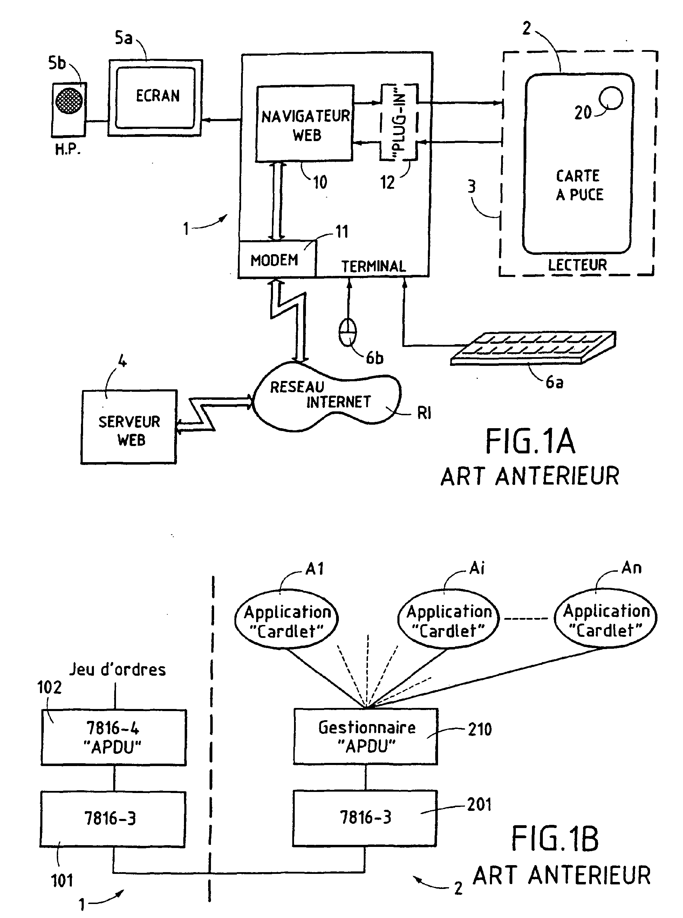

On va tout d'abord rappeler brièvement l'architecture générale d'un système d'application à base de carte à puce, par référence aux figures 1 A et 1B.

Un système d'application à base de carte à puce comporte généralement les éléments principaux suivants :
- une carte à puce ;
- un système hôte constituant le terminal précité ;
- un réseau de communication, à savoir le réseau Internet dans l'application préférée ;
- et un serveur d'application connecté au réseau Internet.

La figure 1A illustre schématiquement un exemple d'architecture de ce type. Le terminal 1, par exemple un ordinateur individuel, comporte un lecteur 3 de carte à puce 2. Ce lecteur 3 peut être ou non physiquement intégré dans le terminal 1. La carte à puce 2 comporte un circuit intégré 20 dont des connexions d'entrées-sorties affleurent en surface de son support pour autoriser une alimentation en énergie électrique et des communications avec le terminal 1. Ce dernier comprend des circuits d'accès 11 au réseau Internet *RI.* Ces circuits peuvent être constitués par un modem pour se connecter à une ligne téléphonique commutée ou, dans le cas de l'invention, de préférence à une voie de communication à plus haut débit : réseau numérique à intégration de services ("RNIS"), câble ou liaisons par satellite. Les circuits 11 permettent de se connecter au réseau Internet *RI,* directement ou via un prestataire de services Internet ("Internet Service Provider" ou "ISP", selon la terminologie anglo-saxonne). On peut également avoir recours à un système intermédiaire tel qu'un "proxy" ou un système d'isolation dit "firewall" ("pare-feu" ou encore appelé "garde barrière").

Le terminal 1 comprend naturellement tous les circuits et organes nécessaires à son bon fonctionnement, et qui n'ont pas été représentés dans un but de simplification du dessin : unité centrale, mémoires vive et fixe, mémoire de masse à disque magnétique, lecteur de disquette et/ou de CédéRom, etc.

Habituellement, le terminal 1 est aussi relié à des périphériques classiques, intégrés ou non, tels un écran de visualisation 5*a* et un système de reproduction sonore 5*b* (permettant la diffusion de fichiers multimédias, dans le cadre de l'invention), un clavier 6*a* et une souris 6*b*, etc.

Le terminal 1 peut être mis en communication avec des serveurs ou tous systèmes informatiques connectés au réseau *RI,* dont un seul, 4, est illustré sur la figure 1A. Les circuits d'accès 11 mettent le terminal 1 en communication avec les serveurs 4 grâce à un logiciel particulier 10, appelé navigateur "WEB", ou "browser" selon la terminologie anglo-saxonne. Celui-ci permet d'accéder à diverses applications ou fichiers de données répartis sur l'ensemble du réseau *RI,* généralement selon un mode "client-serveur", notamment à des fichiers multimédias.

Habituellement, les communications sur les réseaux s'effectuent conformément à des protocoles répondant à des standards comprenant plusieurs couches logicielles superposées. Dans le cas d'un réseau *RI* de type Internet, les communications s'effectuent selon des protocoles spécifiques à ce type de communications, qui seront détaillés ci-après, mais qui comprennent également plusieurs couches logicielles. Le protocole de communication est choisi en fonction de l'application plus particulièrement visée : interrogation de pages "WEB", transferts de fichiers, courrier électronique (e-mel, ou "e-mail" selon la terminologie anglo-saxonne), forums ou "news", etc.

L'architecture logique du système comprenant un terminal, un lecteur de carte à puce et une carte à puce, est représentée schématiquement par la figure 1B. Elle est décrite par la norme ISO 7816, qui elle-même comporte plusieurs sous-ensembtes :
- ISO 7816-1 et 7816-2, en ce qui concerne les dimensions et le marquage des cartes ;
- ISO 7816-3, en ce qui concerne le transfert de données entre le terminal et la carte à puce ; et
- ISO 7816-4, en ce qui concerne la structure du jeu d'ordres et le format des commandes.

Sur la figure 1B, du côté terminal 1, on n'a représenté que les couches répondant à la norme ISO 7816-3, référencées 101, et un gestionnaire d'ordres "APDU" (norme ISO 7816-4), référencé 102. Du côté carte à puce 2, les couches répondant à la norme ISO 7816-3 sont référencées 201 et le gestionnaire d'ordres "ADPU" (norme ISO 7816-4) est référencé 210. Les applications sont référencées *A*_{*1*}*, ..., A*_{*i*}*, ..., A*_{*n*}*, n* étant le nombre maximum d'applications présentes sur la carte à puce 2.

Une application "cardlet" (marque déposée), *A*_{*i*}*,* présente dans la carte à puce 2 (figure 1A), dialogue avec le terminal 1 au moyen d'un jeu d'ordres. Ce jeu présente typiquement des ordres d'écriture et des ordres de lecture. Le format des ordres est connu sous l'abréviation anglo-saxonne de "APDU" (pour "Application Protocol Data Unit"). Il est défini par la norme ISO 7816-4 précitée. Une "APDU" de commande est notée "*APDU.command*" et une "APDU" de réponse est notée "*APDU.response*". Les "APDU" sont échangées entre le lecteur de carte et la carte à puce au moyen d'un protocole spécifié par la norme ISO 7816-3 précitée (par exemple en mode caractère : T=0 ; ou en mode bloc : T=1).

Lorsque la carte à puce 2 inclut plusieurs applications distinctes, comme illustré sur la figure 1B, on parle de carte multi-applicative. Cependant, le terminal 1 ne dialogue qu'avec une seule application à la fois. Une application *A*ᵢ se présente, par exemple, sous la forme d'une pièce de logiciel, dite "applet", en langage "JAVA" (marque déposée), que l'on appellera ci-après "cardlet". La sélection d'un "cardlet" particulier *A*ᵢ est obtenue à l'aide d'une "APDU" du type sélection ("SELECT"). Une fois ce choix effectué, les "APDU" qui le suivent sont acheminés vers ce "cardlet". Une "APDU SELECT" nouvelle a pour effet d'abandonner l'application en cours et d'en choisir une autre. Le sous-ensemble logiciel gestionnaire des "APDU" 210 permet de choisir une application particulière *A*ᵢ dans la carte à puce 2, de mémoriser l'application ainsi choisie, et de transmettre et/ou recevoir des "APDU" vers et depuis cette application.

En résumé de ce qui vient d'être décrit, la sélection d'une application *A*_{*i*} et le dialogue avec celle-ci s'effectuent par échanges d'ordres "APDU". On suppose que les applications *A*_{*i*} sont des applications conventionnelles, que l'on appellera ci-après "GCA" (pour "Generic Card Application" ou application de carte générique).

Ces rappels étant effectués, il est à noter que la carte à puce 2 ne peut communiquer directement avec les navigateurs standards du commerce, sauf à modifier le code de ces derniers.

En outre, et surtout, les cartes à puce actuelles, qui par ailleurs sont conformes aux standards et normes rappelés ci-dessus, ont une configuration matérielle et logicielle qui ne permet pas non plus de communiquer directement avec le réseau Internet. En particulier, elles ne peuvent recevoir et transmettre des paquets de données, selon l'un ou l'autre des protocoles utilisés sur ce type de réseau. Il est donc nécessaire de prévoir une pièce de logiciel additionnelle, implantée dans le terminal 1, généralement sous la forme de ce qui est appelé un "plug-in", selon la terminologie anglo-saxonne. Cette pièce de logiciel, qui porte la référence 12 sur la figure 1A, effectue l'interface entre le navigateur 10 et la carte 2, plus précisément les circuits électroniques 20 de cette carte 2.

Il est clair également que, même compte tenu de la rapide évolution passée des technologies et de leur évolution future prévisible, la capacité d'enregistrement d'informations dans des circuits de mémoire, vive ou fixe, d'une carte à puce reste et restera très limitée, si on compare cette capacité à celle offerte par un terminal "hôte" de cette carte à puce, et naturellement à celles offertes par des systèmes plus importants, "mini-ordinateurs" ou grands systèmes de type dit "main frame". Aussi, il n'est pas possible de stocker dans la carte à puce des fichiers de données volumineux, et notamment des fichiers de type multimédia. Il serait donc nécessaire, en admettant qu'il soit possible de faire communiquer la carte à puce avec le réseau Internet et d'y faire transiter les données (ce que ne permet pas l'art connu, comme il vient d'être rappelé), d'effectuer tous les traitements nécessaires "à la volée", c'est-à-dire sans mise en mémoire, même temporaire. La puissance de calcul des circuits logiques, notamment du microprocesseur présent dans la carte à puce, ne permet pas un tel mode opératoire, dans l'état actuel des techniques connues ou envisageables à court terme.

Enfin, les normes précitées organisent des communications entre carte à puce et terminal, via le lecteur, de type série. Qui plus est, le débit permis par la technologie actuelle est très faible, de l'ordre de 1 à 10 kbits/sec., ce qui, une fois de plus, est incompatible avec les débits envisagés (100 Kbits/sec. au minimum) dans le cadre des applications de l'invention.

L'invention vise à pallier les inconvénients des procédés et dispositifs de l'art connu, et dont certains viennent d'être rappelés, tout en répondant aux besoins qui se font sentir, c'est-à-dire notamment de pouvoir accommoder des flux de données à haut débit, tout en bénéficiant d'une sécurité maximale.

Selon une première caractéristique de l'invention, la carte à puce se comporte comme un senreur/client de type "WEB" pour le terminal qui lui est associé.

Pour ce faire, on prévoit une couche de logiciel de communication spécifique dans la carte à puce et son pendant dans le terminal. Le terme "spécifique" doit être entendu comme spécifique au procédé de l'invention. En effet, ces couches de communication, dites spécifiques, sont banalisées quelle que soit l'application considérée. Elles n'interviennent que dans le processus d'échanges de données bidirectionnels entre la carte à puce et le terminal, d'une part, et la carte à puce et le réseau, d'autre part.

Les couches logicielles de communication spécifiques comprennent notamment des composants logiciels, dits "agents intelligents", permettant en particulier des conversions de protocoles. Les agents intelligents seront appelés ci-après plus simplement "agents". Il existe des agents appareillés dans les couches de communication spécifiques respectives associées au terminal et à la carte à puce. Selon le procédé de l'invention, il s'établit des sessions entre agents appareillés.

Ces dispositions permettent notamment de dériver tout ou partie du flux de données de ou vers le réseau Internet par la carte à puce, ce tout en respectant les normes ISO précitées pour les communications entre carte à puce et terminal, via le lecteur.

Selon une autre caractéristique de l'invention, on implante dans la carte à puce une application particulière, que l'on appellera "filtre" dans ce qui suit. Il s'agit d'une entité logicielle qui joue un rôle analogue à celui d'un "proxy". Pour ce faire, on fait appel aux dispositions précitées mettant en oeuvre des agents. Ce "proxy" permet d'effectuer des traitements de données liés à la sécurité directement au sein de la carte à puce.

Selon une autre caractéristique de l'invention, on implante un protocole de communication dissymétrique. Selon cette caractéristique, le flux de données en émission ou en réception est subdivisé en deux composantes : un premier flux de faible débit et représentant un faible volume de données, que l'on appellera ci-après "flux de données critiques", qui transite directement par la carte à puce, et un flux de fort débit et représentant un grand volume de données, que l'on appellera ci-après "flux de données opaques", qui transite par le terminal.

Dans des applications préférées de l'invention, le flux de données critiques est constitué par des données de sécurité qui peuvent être adressées au "proxy" précité de la carte à puce, pour y être traitées de façon secrète. Les données opaques sont constituées par des données multimédias proprement dites. Ces données sont traitées par des agents localisés dans le terminal. Cependant l'autorisation de recevoir des données opaques et de les traiter est subordonnée au résultat d'une procédure d'authentification initiée par les données de sécurité dans la carte à puce. Du fait de la présence du filtre précité, la réception des données par le terminal reste sous le contrôle direct de la carte à puce.

Les données opaques transitant par le terminal peuvent subir également des traitements particuliers au sein de ce terminal avant utilisation effective, sous la commande et le contrôle de la carte à puce, c'est-à-dire en définitive des données critiques qu'elle a reçues.

Pour ce faire, on prévoit des agents particuliers supplémentaires, que l'on pourra appeler « de protocole », localisés dans la carte à puce et le terminal, ou dans l'un seulement de ces dispositifs.

L'invention a donc pour objet principal un procédé de transmission d'un flux de données, via un réseau de type Internet, entre au moins un serveur distant et un terminal muni d'un lecteur de carte à puce, ledit terminal comprenant au moins une application de type dit "client TCP/IP", ledit terminal et ledit serveur étant tous deux connectés au dit réseau de type Internet, caractérisé en ce qu'il comprend au moins les phases suivantes :
a/ une première phase consistant à implanter, dans ladite carte à puce, une première pièce de logiciel, formant une couche protocolaire de communication spécifique ;
b/ une deuxième phase consistant à implanter, dans ledit terminal, une seconde pièce de logiciel, formant une couche protocolaire de communication spécifique et formant interface avec au moins ladite application de type "client TCP/IP" ;
   - en ce que lesdites première et seconde pièces de logiciel comprennent chacune en outre au moins une première entité logicielle autonome, de type dit client, et une deuxième entité logicielle autonome, de type dit serveur, lesdites entités coopérant de manière à permettre l'établissement de sessions d'échanges de données bidirectionnels entre ledit terminal et ladite carte à puce et de manière à ce que ladite carte à puce offre les fonctionnalités d'un client/serveur de type "WEB", et à permettre l'établissement d'une session d'échanges de données bidirectionnels entre ledit terminal et un desdits serveurs distants, via ledit réseau de type Internet, lesdites entités logicielles autonomes communiquant au moyen d'unités de données de protocole prédéterminées ;
   - en ce qu'il comprend une phase de réalisation, dans ladite carte à puce, d'une pièce de logiciel applicative de caractéristiques fonctionnelles déterminées, dite « filtre », recevant et/ou émettant des unités de données de protocole vers lesdites et/ou à partir desdites première et deuxième entités logicielles autonomes, de types respectifs client et serveur, comprises dans ladite seconde pièce de logiciel spécifique, la réalisation de ladite pièce applicative étant sous le contrôle de ladite entité logicielle autonome de type serveur ;
   - et en ce que ledit filtre coopère avec lesdites entités logicielles autonomes de ladite seconde pièce de logiciel spécifique pour ouvrir une session avec lesdites entités logicielles autonomes de ladite première pièce de logiciel spécifique, pour modifier des caractéristiques prédéterminées dudit flux de données transmis entre ledit terminal et ledit serveur distant.

L'invention va maintenant être décrite de façon plus détaillée en se référant aux dessins annexés, parmi lesquels :
- les figures 1A et 1B illustrent schématiquement les architectures matérielles et logiques, respectivement, d'un exemple de système d'application à base de carte à puce selon l'art connu ;
- la figure 2 illustre schématiquement un exemple de système d'application à base de carte à puce selon l'invention, cette dernière agissant en tant que serveur "WEB" ;
- la figure 3 est un diagramme d'états d'une session entre des entités logicielles dites agents intelligents, selon un aspect de l'invention ;
- la figure 4 illustre de façon simplifiée l'architecture logique d'un système selon l'invention dans lequel la carte à puce comprend des agents intelligents ;
- la figure 5 illustre schématiquement un "proxy" selon l'art connu ;
- la figure 6 illustre de façon simplifiée l'architecture logique d'un système selon l'invention conforme à celui de la figure 4, dans lequel un filtre dit "proxy" est réalisé sur la carte à puce ;
- la figure 7 est un diagramme schématique illustrant un premier exemple de réalisation de filtre dissymétrique (dit de "redirection") dans une architecture conforme à l'invention, du type de celle de la figure 6 ; et
- la figure 8 est un diagramme schématique illustrant un deuxième exemple de réalisation de filtre dissymétrique (dit de "SSL") dans une architecture conforme à l'invention, du type de celle de la figure 6.

Dans ce qui suit, sans en limiter en quoi que ce soit la portée, on se placera ci-après dans le cadre de l'application préférée de l'invention, sauf mention contraire, c'est-à-dire dans le cas d'un flux multimédia sécurisé par un proxy implanté sur une carte à puce coopérant avec un terminal connecté au réseau Internet, réseau Internet sur lequel sont également connectés des serveurs WEB.

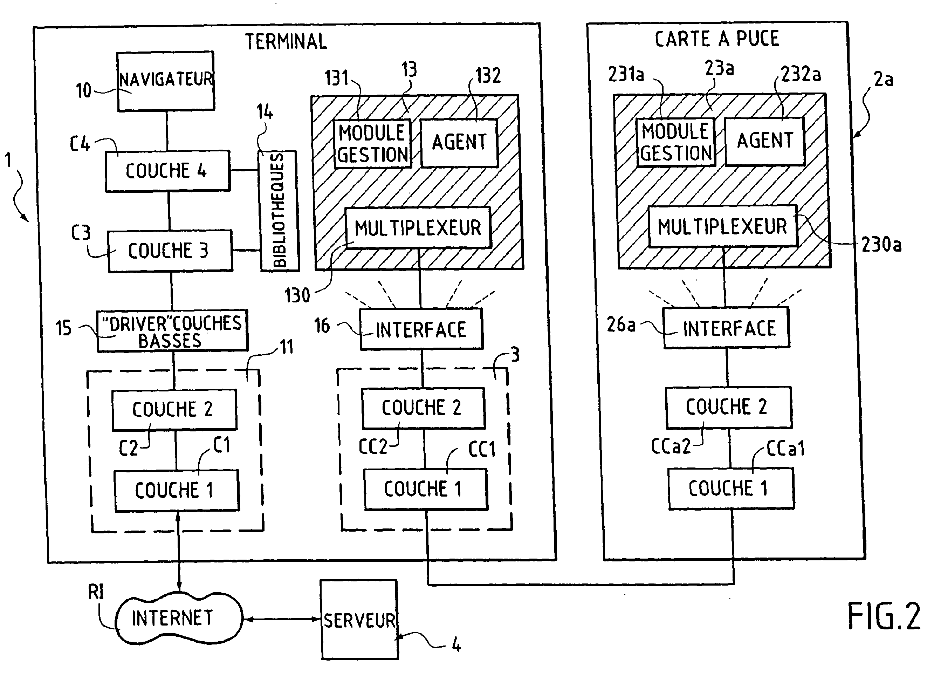

Avant de décrire le procédé d'activation d'applications localisées dans une carte à puce selon l'invention et de détailler une architecture pour sa mise en oeuvre, par référence à la figure 2, il apparaît tout d'abord utile de rappeler brièvement les caractéristiques principales des protocoles de communication sur les réseaux.

L'architecture des réseaux de communication est décrite par diverses couches. A titre d'exemple, le standard "OSI" ("Open System Interconnection"), défini par "I'ISO", comporte sept couches qui vont des couches dites basses (par exemple la couche dite "physique" qui concerne le support de transmission physique) aux couches dites hautes (par exemple la couche dite "d'application"), en passant par des couches intermédiaires, notamment la couche dite de "transport". Une couche donnée offre ses services à la couche qui lui est immédiatement supérieure et requiert de la couche qui lui immédiatement inférieure d'autres services, via des interfaces appropriées. Les couches communiquent à l'aide de primitives. Elles peuvent également communiquer avec des couches de même niveau. Dans certaines architectures, plusieurs couches peuvent être inexistantes.

Dans un environnement de type Internet, les couches sont au nombre de cinq, et de façon plus précise, en allant de la couche supérieure à la couche inférieure : la couche dite d'application ("http", "ftp", "e-mail", etc.), la couche dite de transport ("TCP"), la couche dite d'adressage de réseau ("IP"), la couche dite de liens de données ("PPP", "Slip", etc.) et la couche dite physique.

A l'exception de couches logicielles de protocole de communication spécifiques, référencées 13 et 23a, respectivement implantées dans le terminal 1 et la carte à puce 2*a*, les autres éléments, matériels ou logiciels, sont communs à l'art connu, et il n'y a pas lieu de les re-décrire de façon détaillée.

Le terminal 1 comprend des circuits 11 d'accès au réseau *RI,* constitués par exemple d'un modem. Ces circuits regroupent les couches logicielles inférieures, C₁ et C₂, qui correspondent aux couches "physique" et de "lien de données".

On a également représenté les couches supérieures, C₃ et C₄, qui correspondent aux couches "d'adressage de réseau" ("IP", dans le cas d'Internet) et de "transport" ("TCP"). La couche supérieure d'application ("http", "ftp", "e-mail", etc.) n'a pas été représentée.

L'interface entre les couches inférieures, C₁ et C₂, et les couches supérieures, C₃ et C₄, est constituée par une couche logicielle généralement appelée "driver couches basses". Les couches supérieures, C₃ et C₄, s'appuient sur cette interface et sont mises en oeuvre par l'intermédiaire de bibliothèques de fonctions spécifiques ou bibliothèques réseau 14, avec lesquelles elles correspondent. Dans le cas du réseau Internet, "TCP/IP" est mis en oeuvre au moyen de bibliothèques dites de "sockets".

Cette organisation permet à un navigateur 10 de poser des requêtes vers un serveur 4, pour la consultation de pages "WEB" (protocole "HTTP"), pour le transfert de fichiers (protocole "FTP") ou l'envoi de courrier électronique (protocole "e-mail"), ce de façon tout à fait classique en soi.

Le terminal 1 comprend également un lecteur de carte 3, intégré ou non. Pour communiquer avec la carte à puce 2*a,* le lecteur de carte 3 englobe également deux couches basses, CC₁ (couche physique) et CC₂ (couche de lien de données), jouant un rôle similaire aux couches C₁ et C₂. Les interfaces logicielles avec les couches CC₁ et CC₂ sont décrites, par exemple, par la spécification "PC/SC" ("part 6, service provider"). Les couches elles-mêmes, CC₁ et CC₂, sont notamment décrites par les normes ISO 7816-1 à 7816-4, comme il a été rappelé.

Une couche logicielle supplémentaire 16 forme interface entre les couches applicatives (non représentées) et les couches inférieures, CC₁ et CC₂. La fonction principale dévolue à cette couche 16 est une fonction de multiplexage/démultiplexage.

Les communications avec la carte à puce 2*a* s'effectuent selon un paradigme similaire à celui utilisé pour la manipulation de fichiers dans un système d'exploitation du type "UNIX" (marque déposée) : OUVRIR ("OPEN"), LIRE ("READ"), ECRIRE ("WRITE"), FERMER ("CLOSE"), etc.

Du côté de la carte à puce 2*a*, on retrouve une organisation similaire, à savoir la présence de deux couches basses, référencées CC*a*₁ (couche physique) et CC*a*₂ (couche de lien de données), ainsi qu'une couche d'interface 26a, tout à fait similaire à la couche 16.

Selon une première caractéristique de l'invention, on prévoit, de part et d'autre, c'est-à-dire dans le terminal 1 et dans la carte à puce 2*a*, deux couches de protocoles spécifiques : 13 et 23*a*, respectivement.

Dans le terminal 1, la couche spécifique 13 s'interface aux "drivers couches basses" 15, aux bibliothèques 14 des couches réseau, C₃ et C₄, et aux couches protocolaires du lecteur de carte 3, c'est-à-dire les couches inférieures, CC₁ et CC₂, via la couche de multiplexage 16. La couche spécifique 13 permet le transfert de paquets réseaux de et vers la carte à puce 2*a*. En outre, elle adapte les applications existantes telles le navigateur Internet 10, le courrier électronique, etc., pour des utilisations mettant en oeuvre la carte à puce 2*a*.

Du côté de la carte à puce 2*a*, on retrouve une organisation tout à fait similaire constituée par une instance supplémentaire de la couche spécifique, référencée 23*a*, pendant de la couche 13.

De façon plus précise, les couches spécifiques, 13 et 23a, sont subdivisées en trois éléments logiciels principaux :
- un module, 130 ou 230*a*, de transfert de blocs d'informations entre les couches 13 et 23*a*, via les couches conventionnelles CC₁, CC₂, CC*a*₁ et CC*a*₂ ;
- une ou plusieurs pièces de logiciel, dites "agents intelligents", 132 ou 232*a*, qui réalisent, par exemple, des fonctions de conversion de protocoles ;
- et un module de gestion de la configuration spécifique, 131 et 231*a*, respectivement, module qui peut être assimilé à un agent intelligent particulier.

Pour simplifier, on appellera ci-après les agents intelligents, "agents", comme il a été précédemment indiqué.

On retrouve donc, dans le terminal 1 et la carte à puce 2*a*, une pile protocolaire de communication entre les deux entités.

Les couches de niveau deux (couches de lien de données), CC₂ et CC*a*₂, assurent l'échange entre la carte à puce 2*a* et le terminal 1. Ces couches sont responsables de la détection et l'éventuelle correction d'erreurs de transmission. Différents protocoles sont utilisables, et à titre d'exemples non exhaustifs les suivants :
- la recommandation ETSI GSM 11.11 ;
- le protocole défini par la norme ISO 7816-3, en mode caractère T=0
- le protocole défini par la norme ISO 7816-3, en mode bloc T=1 ;
- ou le protocole défini par la norme ISO 3309, en mode trame "HDLC" (pour "High-Level Data Link Control procedure" ou procédure de commande de liaison à haut niveau).

Dans le cadre de l'invention, on utilisera de préférence le protocole ISO 7816-3, en mode bloc.

De façon connue en soi, à chaque couche de protocole, il est associé un certain nombre de primitives qui permettent les échanges de données entre couches de même niveau et d'une couche à l'autre. A titre d'exemple, les primitives associées à la couche de niveau deux sont du type "demande de données" ("*Data.request*") et "envoi de données" par la carte ("*Data.response*"), ainsi que "confirmation de données" ("*Data.confirm*"), etc.

De façon plus spécifique, les couches 13 et 23a sont chargées du dialogue entre la carte à puce 2*a* et l'hôte, c'est-à-dire le terminal 1. Ces couches permettent l'échange d'informations entre un utilisateur (non représenté) du terminal 1 et la carte à puce 2*a*, par exemple via des menus déroulants sous la forme d'hypertexte au format "HTML". Elles permettent aussi la mise en place d'une configuration adaptée pour l'émission et/ou la réception de paquets de données.

Comme il a été indiqué ci-dessus, les couches comprennent trois entités distinctes.

La première couche, 130 ou 230*a*, est essentiellement constituée par un multiplexeur logiciel. Elle permet l'échange d'informations entre la carte à puce 2*a* et le terminal hôte 1, sous la forme d'unités de données de protocole. Elle joue un rôle similaire à celui d'un commutateur de paquets de données. Ces unités sont émises ou reçues via la couche de niveau deux (couche de liens de données). Ce protocole particulier de communication permet de mettre en communication au moins une paire d' "agents". Le premier agent de chaque paire, 132, est situé dans la couche 13, côté terminal 1, le second, 232*a*, est situé dans la couche 23*a*, côté carte à puce 2*a*. Une liaison entre deux "agents" est associée à une session, que l'on pourra appeler "*S-Agent*". Une session est un échange de données bidirectionnel entre ces deux agents. Si l'une ou l'autre des couches, 13 et 23a, comporte plusieurs agents, les agents d'une même couche peuvent aussi établir des sessions entre eux et/ou avec les modules 131 et 231*a*, qui constituent des agents particuliers.

De façon plus précise, un agent est une entité logicielle autonome qui peut réaliser tout ou partie de fonctions des couches de niveau trois et quatre, en fonction de la configuration mise en oeuvre par le terminal 1.

Les agents sont associés à des propriétés ou attributs particuliers. Pour fixer les idées, et à titre d'exemple non limitatif, les six propriétés suivantes sont associées aux agents :
- "hôte" : agent localisé dans le terminal ;
- "carte" : agent localisé dans la carte à puce ;
- "local" : agent ne communiquant pas avec le réseau ;
- "réseau" : agent communiquant avec le réseau (côté terminal) ;
- "client" : agent qui initialise une session ;
- "serveur" : agent qui reçoit une demande de session.

Un agent particulier est identifié par une référence, par exemple un nombre entier de 16 bits (c'est-à-dire compris entre 0 et 65535). Le bit de poids fort (b15 = 1) indique si la référence est locale (communications locales à la carte à puce ou au terminal) ou distante (b15 = 0).

Il existe deux grandes catégories d'agents : les agents de type "serveur", qui sont identifiés par une référence fixe, et les agents de type "client", qui sont identifiés par une référence variable, que l'on peut qualifier d'éphémère, délivrée par le module de gestion de configuration, 131 ou 231a.

Les agents communiquent entre eux à l'aide d'entité dites "unités de donnée de protocole" ou "*pdu*" (pour "protocol data unit", selon la terminologie anglo-saxonne) comportant une référence de destination et une référence de source. On pourrait également appeler cette "*pdu*" particulière "*SmartTP pdu*"*,en* référence au terme anglais "Smart Card" (carte à puce) couramment utilisé. Les "*pdu*" utilisent notamment les références définies ci-dessus.

Une "*SmartTP pdu*", ou plus simplement "*pdu*" ci-après, comporte une référence source, une référence de destination, un ensemble de bits constituant des drapeaux ou "flags" qui précisent la nature de la "*pdu*", et des données optionnelles :
- le drapeau "*OPEN*" (ouvert) est positionné pour indiquer l'ouverture d'une session ;
- le drapeau "*CLOSE*" (fermé) indique la fermeture d'une session ; et
- Le drapeau "*BLOCK*" (verrouillé) indique que l'agent est en attente d'une réponse de son correspondant et suspend toute activité.

On appellera jeton une "*pdu*" qui ne comporte pas de données.

L'entité "*SmartTP*" contrôle l'existence de l'agent destinataire et réalise la commutation d'un paquet vers ce dernier.

Une session agent "*S-Agent*" possède trois états remarquables, à savoir:
- un état déconnecté : aucune session n'est ouverte avec un autre agent ;
- un état connecté : une session est ouverte avec un autre agent, une session "*S-Agent*" étant identifiée par une paire de références ; et
- un état bloqué, l'agent étant connecté et attendant une réponse de son correspondant.

Le mécanisme d'établissement d'une session "*S-Agent*" est le suivant :
- une nouvelle instance d'un agent client est créée (côté carte à puce ou terminal), cet agent étant identifié par une référence éphémère pseudo-unique ;
- l'agent client émet une "*pdu*" à destination d'un agent serveur (dont la référence est connue par ailleurs) avec le drapeau "*OPEN*" positionné et l'agent client passe à l'état connecté ou bloqué selon la valeur du drapeau "*BLOCK*" ; et
- l'agent serveur reçoit la "*pdu*" avec le drapeau "*OPEN*" et passe à l'état connecté

Une fois une session ouverte, deux agents échangent des données via des "*pdu*"*.*

Le mécanisme de fermeture d'une session est le suivant :
- un agent émet une "*pdu*" avec le drapeau "*CLOSE*" positionné (et qui comporte éventuellement des données) ; et
- l'autre agent reçoit une "*pdu*" avec le drapeau "*CLOSE*" positionné (et qui comporte éventuellement des données) et la session "*S-Agent*" passe à l'état déconnecté.

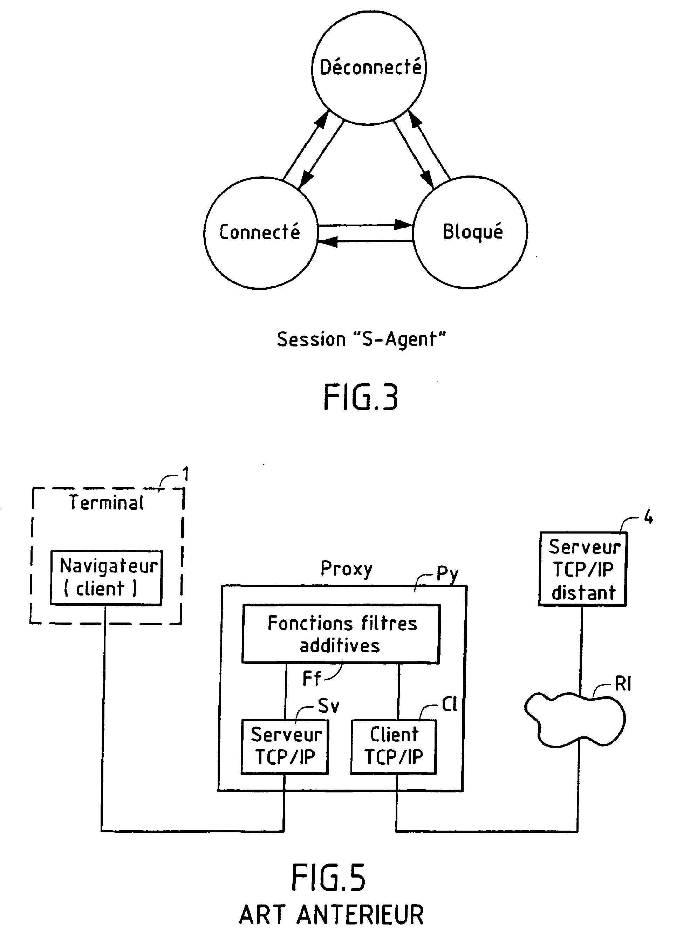

La figure 3 illustre de façon schématique le diagramme d'états des sessions "*S-Agent*"*,* telles qu'elles viennent d'être rappelées.

Les couches 130 et 230*a* gèrent des tables (non représentées) qui contiennent la liste des agents présents, côté terminal hôte 1 et carte à puce 2*a*.

De façon pratique, les agents permettent d'échanger des données (de l'hypertexte, par exemple), mais également de déclencher des transactions réseau.

Les modules de gestion de configuration, 131 et 231*a*, respectivement, sont assimilables à des agents particuliers. Par exemple, le module 131, côté terminal hôte 1, gère notamment des informations relatives à la configuration de ce terminal (modes de fonctionnement), liste des autres agents présents, etc. Le module 231*a*, côté carte à puce 2*a*, a des fonctions analogues. Ces deux agents peuvent être mis en communication l'un avec l'autre pour établir une session.

Selon une première caractéristique de l'invention, la carte à puce 2*a* se comporte comme un client/senreur "WEB".

De façon pratique, la carte à puce 2*a* est avantageusement "adressée" par utilisation d'une adresse "URL" (pour "Universal Resource Locator") définissant un rebouclage sur le terminal 1 lui-même, et non un pointage sur un serveur externe. A titre d'exemple, la structure de cette "URL" est habituellement la suivante :
http://127.0.0.1:8080 (1),
dans laquelle 127.0.0.1 est l'adresse "IP" de rebouclage et 8080 est le numéro de port.

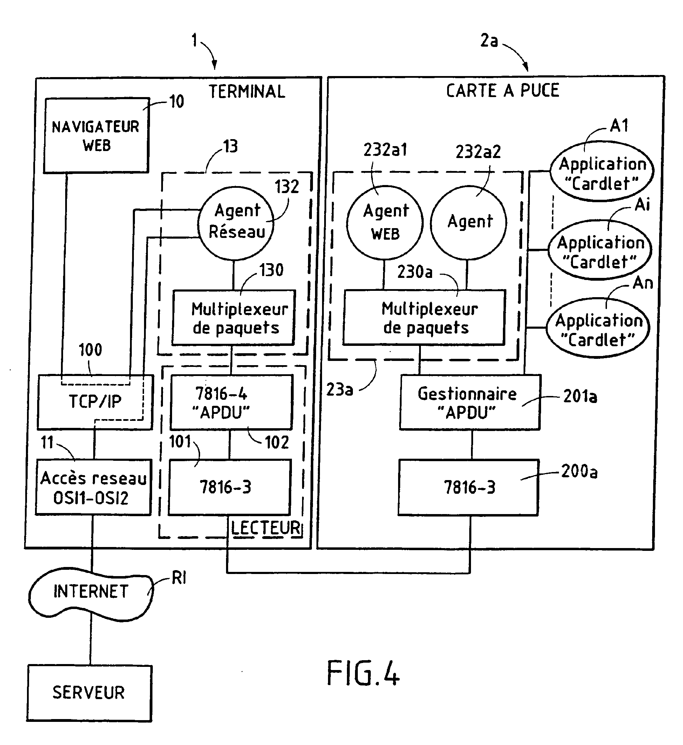

La figure 4 illustre de façon simplifiée l'architecture logique d'un système selon l'invention du type représenté sur la figure 2, mais représenté de façon plus détaillée. La carte à puce 2*a* comprend plusieurs agents, dont deux seulement ont été représentés : un agent 232*a*₁, de type dit "WEB", et un agent de type non précisément défini 232*a*₂. La pile logique comprend les couches de protocole inférieures, référencées 200*a*, répondant aux normes ISO 7816-3 (figure 2 : CC*a*₁ et CC*a*₂), le gestionnaire de commandes "APDU" 201*a*₁, et le multiplexeur de paquets 230*a*, ce dernier étant interfacé aux agents, notamment l'agent "WEB" 231*a*₁.

Du côté terminal, il existe deux piles, l'une communiquant avec le réseau Internet *RI,* l'autre avec la carte à puce 2*a.* La première pile comprend les organes 11 (figure 2 : C₁ et C₂) d'accès au réseau (normes OSI 1 et 2) et les couches de protocole "TCP/IP" (figure 2 : C₃ et C₄), référencées 100. Ces dernières couches sont interfacées avec le navigateur "WEB" 10. L'autre pile comprend les couches de protocole inférieures, référencées 101, répondant aux normes ISO 7816-3 (figure 2 : C₁ et C₂), le gestionnaire 102 d'ordres "APDU" et le multiplexeur de paquets 130, ce dernier étant interfacé avec des agents, dont un seul 132, est représenté. Ce dernier, que l'on supposera de "type réseau", peut en outre communiquer, d'une part avec le navigateur 10, via les couches "TCP/IP" 100, d'autre part avec le réseau Internet *RI,* via ces mêmes couches "TCP/IP" 100 et l'organe 11, d'accès au réseau *RI.*

Le gestionnaire d'ordres "APDU" 201*a* est également interfacé avec une ou plusieurs couches de niveau applications, que l'on appellera simplement applications. Ces applications, *A*₁, ..., *A*ᵢ, ..., *A*ₙ, sont, comme il a été indiqué, des applications de type conventionnel, que l'on a appelé "cardlet".

En résumé, la fonction client/serveur "WEB", fournie par la carte à puce 2*a*, peut être réalisée par l'association de l'agent "WEB" 232*a*₁ dans la carte à puce et de l'agent réseau 132 dans le terminal 1, et par la mise en oeuvre de sessions entre agents, comme il a été décrit.

La carte à puce 2*a* présente donc bien la fonctionnalité client/serveur "WEB". En outre, selon une caractéristique du procédé de l'invention, n'importe quelle application conventionnelle, *A*₁ à *A*_{*n*}*,* du type "GCA" précité, peut être activée au travers de ce client/serveur "WEB", soit par le navigateur "WEB" 10 présent dans le terminal 1, soit par un navigateur éloigné 4, localisé en un point quelconque du réseau Internet *RI*, par la mise en oeuvre de sessions entre agents. Selon le procédé de l'invention, les applications, *A*₁ à *A*_{*n*}*,* ne nécessitent pas d'être ré-écrites et sont mises en oeuvre telles quelles.

Selon un autre aspect de l'invention, en mettant en oeuvre le mécanisme d'agents qui vient d'être décrit, on implante directement sur la carte à puce 2*a* une fonction dite de "proxy TCP/IP". Cette fonction est réalisée par une application logicielle particulière que l'on appellera "filtre "ci-après.

La fonctionnalité "proxy" est bien connue dans le domaine des applications Internet, mais ne peut être implantée dans les cartes à puce des systèmes selon l'art connu.

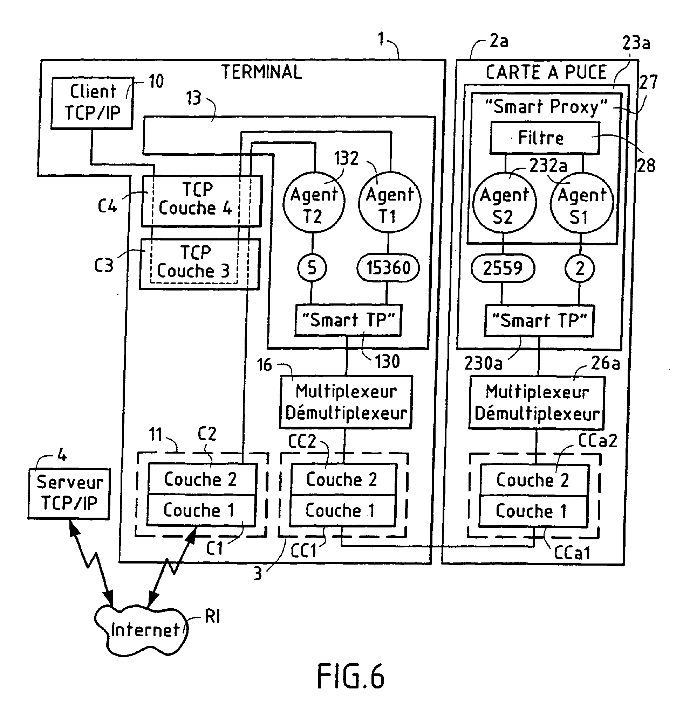

Avant de décrire une architecture conforme à l'invention, on va tout d'abord rappeler brièvement les caractéristiques d'un "proxy" classique selon l'art connu, par référence à la figure 5.

Dans la technologie "TCP/IP", on nomme "proxy" une entité logicielle *Py* qui réalise, d'une part, un serveur "TCP/IP" *Sv* et, d'autre part, un client "TCP/IP" *Cl.* L'entité logicielle *Py* réalise une connexion entre un client local et un autre serveur TCP/IP distant.

Un proxy P*y* réalise usuellement des fonctions de filtre et/ou de sécurité. Par exemple, un proxy "http" assure généralement la connexion d'un navigateur, par exemple le navigateur 10 du terminal 1, à un serveur "WEB" 4, dans une entreprise (ce qui est connu sous la dénomination "firewall" ou "pare-feu"). Il peut s'agir également d'un proxy dit "SSL", que l'on peut définir comme étant un "proxy" local au terminal, qui réalise des opérations de sécurité nécessaires (authentification - confidentialité - intégrité) à l'établissement d'un tunnel sécurisé au travers du réseau Internet *RI.*

On va maintenant décrire une architecture logicielle intégrant la fonction "proxy " directement dans une carte à puce, selon un aspect supplémentaire de l'invention, par référence à la figure 6.

Les éléments communs aux figures précédentes portent les mêmes références et ne seront re-décrits qu'en tant que de besoin. Pour simplifier la description, les agents, côté terminal 1 sont regroupés sous la référence unique 132, et côté carte à puce 2*a*, sous la référence unique 232*a*. Ils seront différenciés dans ce qui suit par la lettre "T", pour "terminal", et "S" pour "Smart Card" (carte à puce), lettres associées à des chiffres en indice. Le "proxy" 27 réalisé sur la carte à puce 2*a* sera appelé "*Smart Proxy*" dans ce qui suit.

Le "*Smart Proxy*" 27 est réalisé par l'association de quatre agents, deux côté terminal 1 : T₁ et T₂, et deux côté carte à puce 2*a* : S₁ et S₂, et d'une fonction filtre 28, comme décrit ci-après :
- un agent "Terminal/Client/Réseau" T₁ réalise un serveur TCP/IP (par exemple sur le port 8080) ;
- un agent "Carte/Serveur/local" S₁ est associé par une session à l'agent T₁, cet agent réalisant typiquement les fonctions d'un serveur "WEB" ;
- une fonction filtre 28 qui est déterminée en fonction d'informations en provenance de l'agent T₁, cette dernière fonction étant en mesure d'émettre ou de recevoir des *"pdu"* vers/depuis les agents S₁ et S₂ ;
- un agent S₂ "Carte/Client/Local", une instance de cet agent étant créée de manière dynamique par la fonction filtre 28 et S₂ ouvrant une session avec l'agent "réseau" T₂, auquel il indiquera l'adresse du serveur distant Internet 4 auquel S₂ veut être relié ; et
- un agent T₂ "Terminal/Serveur/Réseau" réalise la fonction d'un client "TCP/IP", qui est connecté à un serveur Internet 4.

Le mécanisme de création du "*Smart Proxy*" 27 est décrit ci-dessous.

Un client "TCP", que l'on appellera ci-après "cTCP", typiquement le navigateur "WEB" 10, ouvre une connexion avec l'agent "réseau" T₁. Une session T₁-S₁ est ensuite créée. Par exemple l'URL suivante :
http://127.0.0.1:8080/?des1=xxx.com:80/yyy/content.html (2)
provoque l'ouverture d'une session entre les agents T₁ et S₁.

A partir des données échangées par T1 et S1, l'application associée à l'agent S1 (un serveur WEB) détermine quelle fonction filtre 28 doit être utilisée. Ainsi "des1" est le nom d'un filtre particulier, "xxx.com" est le nom arbitraire d'un serveur Internet, par exemple du serveur 4, "80" un numéro de port et "/yyy/content.html" est le nom arbitraire d'un fichier sur ce serveur, constitué dans l'exemple par une page en langage "HTML". Dans l'exemple, le filtre "des1" est un filtre permettant de réaliser une opération de déchiffrage et/ou de chiffrage selon un algorithme de type "DES" ("Data Encryption Standard").

En d'autres termes, l'URL "carte" (2) encapsule une autre URL destinée au monde extérieur, la première partie de cette URL étant constituée par l'URL de rebouclage tel que défini par la relation (1).

Le filtre 28 "des1 "crée une instance de client S₂ ; une session est ouverte entre les agents S₂ et T₂. Les données insérées dans la première "*pdu*" ("*pdu OPEN*") précisent le nom du serveur Internet ("xxx.com") et son numéro de port associé (80).

L'agent T₂ ouvre une connexion de type "TCP" avec le serveur distant "sTCP" ("zzz.com"). Une fois que cette dernière est établie, un jeton est émis à destination de S₂.

Au terme de ces échanges, un "*Smart Proxy*" 27 a été créé, une fonction filtre 28 qui réside dans la carte à puce 2*a* est en mesure de traiter les données (en provenance du réseau Internet *RI*) reçues par les agents "réseau". Le filtre 28 contrôle les données émises par les agents "*réseau*", T₁ et T₂, de manière logique. Il se comporte comme un "proxy TCP" qui contrôle les données échangées entre le client "cTCP" et le serveur "sTCP".

Pour fixer les idées, on a représenté sur la figure 6 des numéros de référence arbitraires des différents agents : fixes, "2" et "5", pour les agents de type "serveur", respectivement T₂ et S₁, et variables ou éphémères, "15360" et "2559", pour les agents de type "client", respectivement T₁ et S₂,

On va maintenant décrire plus précisément des exemples particuliers de filtres 28.

### Exemple N° 1 : filtre de redirection

Un filtre de redirection associe à une URL carte, par exemple l'URL suivante :
(http//127.0.0.1:8080/eMail) (3)
une requête "http" vers un serveur externe (par exemple www.email.com) qui peut servir par exemple à poster, par utilisation de la méthode bien connue "POST http", des données d'identification : "login" et mot de passe par exemple, associées à un serveur de courrier gratuit "email". Le filtre peut également assurer une identification/authentification du bénéficiaire du service par des méthodes plus sûres à base de challenge (ces méthodes sont décrites, par exemple, dans la norme "http 1.1 ")

La mise en oeuvre d'un filtre de redirection comprend typiquement les étapes suivantes :
1. le navigateur 10 ouvre une connexion avec l'agent "réseau" T₁ (adresse IP : 127.0.0.1:8080) et la session T₁-S₁ est ouverte avec le serveur "WEB" de la carte 2*a* ;
2. la requête "http" (selon la recommandation "http 1.1 rfc 2068") est transmise depuis le navigateur 10 à destination de l'agent "WEB" S₁ et celui-ci détecte, à partir du nom du fichier "/eMail", l'appel à un filtre 28, de redirection dans ce cas particulier : à partir de cet instant, toutes les données reçues par l'agent "réseau" T₁ sont traitées par ce filtre particulier 28 ;
3. une instance d'agent client S₂ est créée par le filtre 28 ;
4. S₂ ouvre une session avec l'agent "réseau" T₂ et la première "*pdu*" émise (drapeau "*OPEN*" positionné) comporte l'adresse et le port du serveur "WEB" distant 4 ("www.email.com" dans l'exemple) ;
5. l'agent T₂ ouvre une connexion avec le serveur "WEB" distant 4 et, après ouverture, un jeton est émis vers l'agent S_{2;}
6. l'agent S₂ transmet une requête "http" vers le serveur "WEB" distant 4 ;
7. ce serveur 4 transmet typiquement un en-tête de redirection "http" qui notifie le succès de l'opération et fournit au navigateur 10 une nouvelle "URL" de connexion et une pièce de logiciel, connue sous le nom de "cookie", qu'il doit utiliser ;
8. la fonction filtre 28 n'effectue aucun traitement sur ces données ; et
9. les données sont transmises au navigateur "WEB" 10 par la session S₁₋T₁.

Lorsque le navigateur 10 reçoit l'en-tête de redirection, il se connecte au serveur de courrier 4 avec le "cookie" approprié. Il reçoit typiquement en retour une page d'accueil écrite en langage "HTML".

### Exemple N° 2 : filtre "http - des"

On va maintenant considérer le cas d'une page "HTML" encodée par un algorithme du type "DES" précité. Cette page nommée, par exemple, "/yyy/content.html" est logée sur un serveur "WEB" 4 : "zzz.com:80". Une fonction filtre 28 localisée dans la carte (de nom arbitraire "?des1") va réaliser un algorithme de déchiffrement, c'est-à-dire une fonction inverse (ou "DES⁻¹"), ce avec une clé associée à un index 1.

L'URL suivante :
http://zzz.com/yyy/content.html (4),
exécutée depuis un navigateur 10, provoque le chargement du fichier "content.html" depuis le serveur "zzz.com. La page "HTML" étant codée, les balises «html> et </html», utilisées pour marquer, selon les conventions du langage "HTML", le début et la fin du document, n'apparaîtront pas en clair et le navigateur 10 affichera soit des signes incohérents, soit une erreur indiquant qu'une page "HTML" n'a pas été reçue.

L'URL suivante :
http://127.0.0.1:8080/?des1=zzz.com:80/yyy/content.html (5)
indique à la carte de charger la page :
http://zzz.com:80/yyy/content.html (6)
à travers un filtre 28 ce type "DES", dont l'index de clé est 1.

Le chargement de la page "content.html" s'effectue de la manière suivante :
1. le navigateur 10 ouvre une connexion avec l'agent *"réseau"* T₁ (adresse IP : 127.0.0.1:8080) et la session T₁-S₁ est ouverte avec le serveur "WEB" de la carte à puce 2*a* ;
2. la requête "http" ("http 1.1 rfc 2068") est transmise depuis le navigateur 10 à destination de l'agent "WEB" S₁ et à partir du nom du fichier "/?des1 = zzz.com:80/yyy/content.html", l'agent "WEB" S₁ détecte l'appel à une fonction filtre 28 de type "DES" (clé d'index 1) : à partir de cet instant, toutes les données reçues par l'agent "*réseau*" T₁ sont traitées par le filtre 28 de type "DES" associé à la clé d'index 1 ;
3. une instance d'agent client S₂ est crée par le filtre 28 ;
4. S₂ ouvre une session avec l'agent "réseau" T₂ : la première "*pdu*" émise (drapeau "*OPEN*" positionné) comporte l'adresse et le port du serveur "WEB" distant 4 ("zzz.com").
5. l'agent T₂ ouvre une connexion avec le serveur "WEB" distant 4 et, après ouverture, un jeton est émis vers l'agent S_{2;}
6. l'agent S₂ transmet une requête "http" vers le serveur distant 4 ;
7. le serveur distant 4 transmet un en-tête "http" qui indique la nature du fichier et transmet le fichier proprement dit : ces données sont relayées à la fonction filtre 28 par la session T₂-S₂ ;
8. la fonction filtre 28 n'effectue aucun traitement sur l'en-tête "http" et déchiffre la page "HTML" ; et
9. les données déchiffrées sont transmises au navigateur "WEB" 10 par la session S₁-T₁.

Le résultat de cette opération est que le navigateur 10 reçoit une page "HTML" décodée. L'opération de redirection peut être automatisée par un script (typiquement en langage "Java Script", marque déposée). Par exemple, un script inclus dans une page "HTML" (que l'on appellera arbitrairement "content.html") redirige l'URL :
http://zzz.com/yyy/xcontent.html (7), en
http://127.0.0.1:8080/?des1 =zzz.com/yyy/content.html (8), xcontent.html et content.html étant les noms arbitraires de deux pages "HTML".

### Exemple N° 3 : filtre "SSL"

Le protocole dit "Secure Socket Layer" ou "SSL" est largement utilisé pour les applications de type "WEB". Il permet d'ouvrir des "tunnels sécurisés" entre un client (typiquement le navigateur 10) et un serveur. "SSL" permet d'authentifier le serveur et d'assurer la confidentialité et l'intégrité des données échangées. Pour ce faire, un secret partagé est construit à partir d'une clé dite publique, propre au serveur. Une clé de session est déduite du secret partagé et assure, par exemple, le chiffrement de l'information à l'aide d'un algorithme de type "triple DES". Comme il est bien connu en soi, on utilise également une technique mettant en oeuvre des "certificats" d'authentification.

L'intérêt de la réalisation d'un filtre "SSL" directement dans la carte à puce 2*a* est que la vérification du certificat de la clé publique du serveur (ce qui constitue le point essentiel des systèmes à clés publiques) est effectuée par la carte à puce et non par un logiciel résidant dans le terminal, *a priori* jugé peut sûr. De manière classique, une fois qu'une session "SSL" est ouverte, un utilisateur ou "internaute" (non représenté) fournit des données d'identification personnelle, classiquement l'association d'un "login" et d'un mot de passe, qui sont entrés en clair sur le terminal 1, à l'aide d'un clavier (figure 1 A : 6*a*). Un autre avantage d'une session "SSL" menée à partir de la carte à puce 2*a* est que le "login" et le mot de passe sont fournis par la carte à puce 2*a* et non par l'utilisateur.

Une connexion "SSL" se déroule de la manière suivante :

On va maintenant considérer une page "HTML" que l'on désire obtenir par une session "SSL". Cette page nommée par exemple "/yyy /content.html" est logée sur un serveur distant WEB 4 (de nom arbitraire "www.bank.com"). Une fonction filtre particulière 28 localisée dans la carte (appelée arbitrairement "?ssl1") réalise le protocole SSL et utilise un login et un mot de passe associé à un index 1.

L'URL suivante :
http://127.0.0.1:8080/?ssl1=www.bank.com:80/yyy/content.html (9)
indique à la carte à puce 2*a* de charger la page "/yyy /content.html" en faisant appel au protocole "SSL".

Le chargement de la page "content.html" s'effectue de la manière suivante :
1. le navigateur 10 ouvre une connexion avec l'agent "réseau" T₁ (adresse IP: 127.0.0.1:8080) et la session T₁-S₁ est ouverte avec le serveur WEB de la carte à puce 2*a* ;
2. la requête "http" (conforme à "http 1.1 rfc 2068") est transmise depuis le navigateur 10 à destination de l'agent "WEB" S₁ et à partir du nom du fichier "/?ssl1 = www.bank.com:80/yyy /content.html", et l'agent "WEB" S₁ détecte l'appel d'une fonction filtre 28 particulière du type "SSL" (avec des clés d'index 1) : à partir de cet instant, toutes les données reçues par l'agent "*réseau*" T₁ sont traitées par le filtre "SSL" 28 ;
3. une instance d'agent client S₂ est créée par le filtre 28 ;
4. S₂ ouvre une session avec l'agent "*réseau*" T₂ et la première "*pdu*" émise (drapeau "*OPEN*" positionné) comporte l'adresse et le port (N° 443 dans cet exemple) du serveur "WEB SSL" distant ("www.bank.com:443").
5. l'agent T₂ ouvre une connexion avec le serveur "WEB" distant 4 et, après ouverture, un jeton est émis vers l'agent S₂ ;
6. le filtre 28 entame une négociation conforme au protocole "SSL" avec le serveur distant 4, au moyen de la session T₂-S₂ ;
7. lorsqu'une session "SSL" est ouverte, le "login" et le mot de passe sont transmis par le filtre 28 au serveur distant 4 et la session T₂-S₂ est fermée
8. une nouvelle session : S₂-T₂ est ouverte par le filtre 28 ;.
9. le filtre 28 négocie la reprise de la session "SSL" précédente ;
10. L'agent S₂ transmet une requête "http" chiffrée d'obtention du fichier "content.html" vers le serveur distant 4 ;
11. le serveur distant 4 transmet un en-tête "http" qui indique la nature du fichier et transmet le fichier proprement dit : ces données sont relayées à la fonction filtre 28 par la session S₂-T₂ ;
12. la fonction filtre 28 décode les données reçues et vérifie leur intégrité ; et
13. les données déchiffrées sont transmises au navigateur "WEB" 10 par la session S₁-T₁.

Le résultat de cette opération est que le navigateur 10 reçoit une page "HTML" décodée. L'opération de redirection peut être automatisée par un script (typiquement un "Java Script"). Par exemple, un script inclus dans une page "HTML" redirige l'URL :
http://I27.0.0.1:8080/?ssl1 =www.bank.com/yyy/content.html (10), en
http://www.bank.com/-yyy /xcontent.html (11).

On va maintenant décrire un aspect supplémentaire de l'invention qui va permettre notamment de traiter des flux de données multimédias selon un protocole de communication dissymétrique.

Lorsque le terminal 1 obtient des données multimédias, par exemple depuis le réseau Internet *RI,* ces données perdent tout caractère de confidentialité et sont mémorisées par un système généralement peu sûr.

Un "*Smart Proxy*"*,* réalisé selon l'une des caractéristiques de l'invention, constitue alors un dispositif clé pour l'identification et l'authentification du bénéficiaire d'un service particulier. Les algorithmes et les clés sont stockés et exécutés à l'intérieur de la carte à puce 2*a.* Une fois qu'un filtre particulier 28 a ouvert une connexion "TCP" avec un serveur distant 4, deux cas peuvent être envisagés :
A/ des clés fixes et secrètes sont utilisées pour assurer l'intégrité et la confidentialité des données : dans ce cas, le flux de données est déchiffré et vérifié par le filtre du "*Smart Proxy*" ; ou
B/ des clés éphémères, encore nommées "clés de session" sont calculées lorsque qu'une connexion est ouverte avec succès entre le filtre 28 et le serveur distant 4 : le deuxième cas se rencontre dans de nombreux protocoles de sécurité utilisés pour le réseau Internet, comme par exemple le protocole "SSL" précité ou le protocole "IPSEC".

Lorsque des clés de session éphémères sont utilisées, le calcul des algorithmes par la carte à puce 2*a* ne présente pas d'intérêt particulier puisque de toute façon ces clés ne seront utilisées qu'une seule fois et que leur seul but est de permettre le transfert en clair de données sur un terminal peu sûr.

Parfois, la connexion avec le serveur 4 est dissymétrique du point de vue de la sécurité. Une procédure d'identification et d'authentification est secrète, alors que les données échangées par la suite ne présentent aucun caractère confidentiel. On voit donc apparaître la notion de flux de données que l'on appellera ci-après "critique", le "flux critique" représentant des données qui doivent être traitées par le "*Smart Proxy*" de manière secrète. Des clés de session éphémères (parfois variables au cours d'une même connexion) peuvent être déduites du flux critique, et être mises en oeuvre par le terminal 1 sans mesure particulière de sécurité.

On distinguera donc ci-après le flux critique, qui désigne le flux de données qui doit être traité par le "*Smart Proxy*", d'un flux de données dit "opaque" qui peut être traité sur un terminal non sûr.

Dans ce contexte, des "*pdu*" ("*pdu*" de commandes) identifiées par une valeur particulière du champ drapeau permettent de transmettre des commandes aux agents. Ces commandes sont traitées par l'agent adressé proprement dit et ne sont pas transmises vers un autre agent ou sur le réseau *RI.*

Toujours dans ce contexte, bien que le mécanisme des agents propre à l'invention soit mis en oeuvre, des échanges de données peuvent avoir lieu hors session.

Deux agents peuvent en effet échanger une certaine quantité de données sans être connectés via une session. Une "*pdu*" de commande particulière indique à un premier agent, arbitrairement appelé A₁, la quantité de données Q₁ à émettre (hors champs référence source, référence destination et drapeau), et une autre "*pdu*" indique à un deuxième agent, arbitrairement appelé A₂, la quantité de données Q₂ émises depuis l'agent A₁ et qu'il est autorisé à recevoir. Les "*pdu*" qui comportent le drapeau "*CLOSE*" ne sont pas transmises hors session.

Les cheminements des flux critique et opaque sont respectivement les suivants :

Le flux critique contient des informations secrètes qui doivent être traitées par le filtre 28 associé au "*Smart Proxy*" et doivent donc transiter obligatoirement par la carte à puce 2*a*. Le flux opaque peut être traité uniquement par des agents localisés sur le terminal 1, en utilisant un mécanisme d'échange de données hors session, par exemple.

Le flux opaque peut être sécurisé par le flux critique.

En effet, un flux global de donnés peut se décomposer généralement en un flux critique et en un flux opaque, ce qui permet, par exemple, de déchiffrer un flux de fort débit (par exemple représentant des données multimédias proprement dites) par un flux critique de plus faible amplitude.

Les dispositions propres à l'invention permettent de traiter un tel flux de données multimédia à fort débit en organisant des protocoles de communication et de traitement de données dissymétriques.

### Exemple N° 4 : filtre de redirection dissymétrique

Un filtre de redirection dissymétrique associe, à une URL "carte" du type :
http//127.0.0.1:8080/?f1=/www.host.com/unFichier (12),
une requête "http" vers un serveur externe 4, par exemple :
http://www.host.com/unFichier (13)

La connexion au serveur 4, qui comporte une phase d'identification et d'authentification (mécanisme à base de "challenge" par exemple), est gérée par le filtre 28, que l'on appellera arbitrairement "?f1", associé au "*Smart Proxy*" 27. Le filtre 28 est dit dissymétrique car, une fois l'authentification réalisée, les données échangées avec le serveur 4 ne sont pas chiffrées et ne transitent plus par le filtre 28.

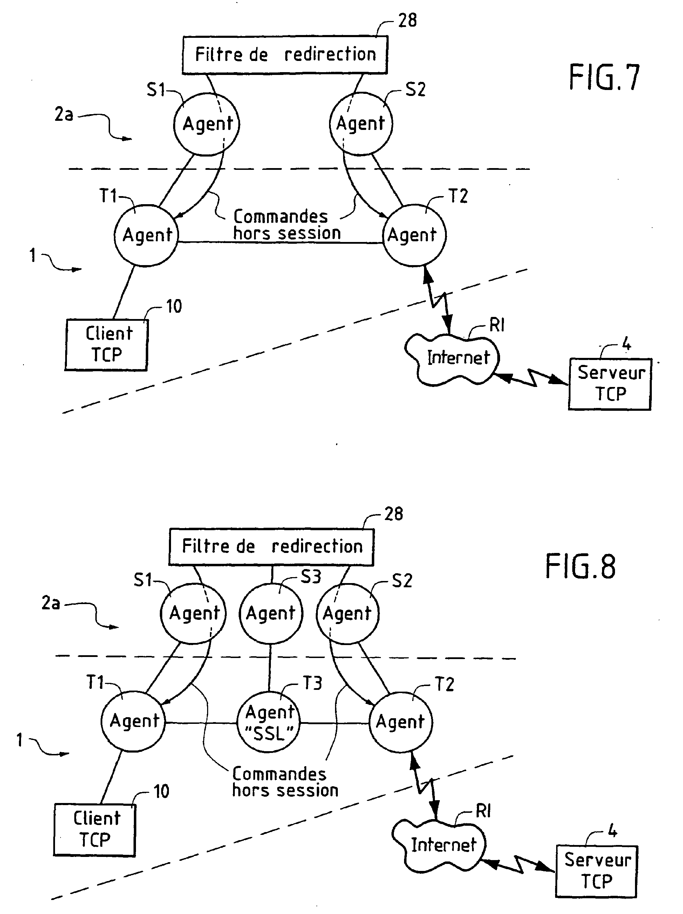

Les étapes de mise en oeuvre d'un filtre de redirection dissymétrique 28, illustrées schématiquement par le diagramme de la figure 7 (qui reprend, de façon simplifiée l'architecture selon l'invention du système de la figure 6), sont les suivantes :
1. le navigateur 10 ouvre une connexion avec l'agent "réseau" T₁ (adresse IP : 127.0.0.1:8080) ; la session T₁-S₁ est ouverte avec le serveur WEB de la carte à puce 2*a* ;
2. une requête "http" est transmise par le navigateur 10 à destination de l'agent "WEB" S₁ et, à partir du nom du fichier "/?f1 =/www.host.com/unFichier", l'agent "WEB" S₁ détecte l'appel à un filtre de redirection particulier 28 ("?f1") : à partir de cet instant, toutes les données reçues par l'agent "réseau" T₁ sont traitées par ce filtre 28 ;
3. une instance d'agent client S₂ est créée par le filtre 28 ;
4. S₂ ouvre une session avec l'agent "réseau" T₂ : la première "*pdu*" émise (drapeau "*OPEN*" positionné) comporte l'adresse et le port du serveur WEB distant 4 ("www.host.com") ;
5. l'agent T₂ ouvre une connexion avec le serveur "WEB" distant 4 et, après ouverture, un jeton est émis vers l'agent S₂ ;
6. une procédure d'authentification se produit entre le filtre 28 "?f1" et le serveur distant 4, et des données sont échangées par la session S₂-T₂ ;
7. si cette procédure aboutit, le filtre 28 envoie une "*pdu*" de commande à l'agent T₁ qui l'autorise à recevoir toutes les données émises hors session par l'agent T₂, et envoie une "*pdu*" de commande à l'agent "réseau" T₂ qui lui indique de transmettre toutes les données reçues du réseau vers l'agent T₁ : les données en provenance du serveur distant 4 sont relayées, via les agents T₂ et T₁, vers le navigateur 10 et donc ne traversent plus la carte à puce 2*a* ; et
8. Lorsqu'une déconnexion "TCP" se produit (sous la commande du serveur 4) l'un des agents, T₁ ou T₂, émet une "*pdu*" avec un drapeau à l'état "*CLOSE*" vers l'un des agents S₁ ou S₂, et le filtre 28 supervise alors l'abandon des sessions T₁-S₁ et T₂-S₂.

### Exemple N° 5 : filtre "SSL" dissymétrique

Cet exemple est illustré schématiquement par le diagramme de la figure 8, qui reprend de façon simplifiée l'essentiel de l'architecture selon l'invention du système de la figure 6.

Comme il a été décrit précédemment dans l'exemple N° 3, un filtre "SSL" peut être activé au moyen d'une URL "carte" (par exemple celle de la relation (11)). Dans un tel protocole, le flux de données critiques est utilisé pour sélectionner une paire d'entités qui comprend un algorithme de chiffrement et une fonction dite de hachage (ou "hash" selon la terminologie anglo-saxonne) à sens unique, ainsi qu'un certain nombre de paramètres associés (clés et valeur courante de la fonction de "hash"). Une fois une phase de négociation terminée, l'exécution de ces algorithmes dans la carte à puce 2*a* ne présente pas d'intérêt particulier, puisque les données sont dirigées en clair depuis le réseau Internet *RI* vers le terminal 1.

On peut donc utiliser avantageusement un agent supplémentaire T₃ (de type serveur) auquel est dévolue une fonction "SSL". Cet agent T₃ est localisé dans le terminal 1. Une fois que les paramètres de la session "SSL" ont été négociés, le filtre "SSL" 28 ouvre une session entre un agent client supplémentaire S₃ (côté carte à puce 2*a*) et l'agent serveur "SSL" T₃ (côté terminal). Lors de l'ouverture de la session, l'agent T₃ est initialisé avec des valeurs de clés "DES" et des paramètres en cours de la fonction de "hash". Le filtre "SSL" 28 envoie une "*pdu*" de commande à l'agent T₂, qui lui permet de retransmettre vers le réseau *RI* les données émises hors session par T₃, et de rediriger les données reçues du réseau vers T₃. Le filtre "SSL" 28 envoie une "*pdu*" de commande à l'agent T₃ pour lui permettre de recevoir, hors session, les données émises par T₁ et T₂. Le filtre "SSL" envoie une "*pdu*" de commande à l'agent T₁, qui lui permet de retransmettre vers le réseau *RI* les données émises hors session par T₃, et de rediriger les données reçues de ce réseau *RI* vers T₃. Un "tunnel" hors session est alors établi dans le terminal 1, entre T₁-T₂-T₃. Lorsqu'un agent T₁ ou T₂ ferme la session qui lui est associée, le filtre 28 procède à la fermeture des deux autres sessions restantes.

### Filtre dissymétrique, cas général

De manière plus générale, et en se reportant de nouveau à l'un ou l'autre des diagrammes des figures 7 ou 8, les étapes de la procédure mettant en oeuvre un filtre dissymétrique 28 sont les suivantes :

Un "*Smart Proxy*" 27 (figure 6) est réalisé à partir d'une URL "carte" au moyen de deux sessions T₁-S₁ et T₂-S₂. Le filtre particulier à réaliser 28 est déterminé à partir de cette URL. Dans un premier temps, le filtre 28 contrôle le flux de donnée entre le client "TCP" (navigateur 10) et le serveur distant 4. A la fin d'une phase d'authentification et de négociation, un jeu de paramètres de sécurité est obtenu. Il consiste en un flux de données critique.

Le filtre 28 ouvre alors une session avec un agent de sécurité (T₃, par exemple) qui réalise le protocole négocié avec un jeu de paramètres définis par le filtre 28 lors de l'ouverture de la session. Le filtre 28 crée un "tunnel" de transfert de données hors session T₁-T₂-T₃. Par exemple, une quantité prédéterminée de données est transmise hors bande par la chaîne T₁-T₂-T₃. En d'autres termes, le flux de données opaques est traité par l'ensemble T₁-T₂-T₃, et ne transite donc pas par la carte à puce 2*a*. Les données critiques peuvent être identifiées par diverses méthodes: longueur de données opaques fixée périodiquement, marques dans un paquet "TCP" au moyen d'un pointeur de données urgentes, etc. Ces méthodes sont connues en soi. Les données critiques, contrairement aux données opaques, sont transmises par des agents du terminal 1, T₁ ou T₂, au filtre 28. Ce dernier modifie en conséquence, au moyen d'une "*pdu*" de commande, les paramètres fonctionnels de l'agent T₃. Lorsqu'un agent du terminal 1, T₁ ou T₂, ferme la session qui lui est associée, le filtre 28 procède à la fermeture des deux autres sessions restantes.

De façon générale également, le flux de données opaques, en dehors de tout aspect lié à la sécurité, peut subir diverses transformations, effectuées par exemple par un agent supplémentaire, similaire à l'agent T₃. Le terme "sécurité" doit être compris dans son acceptation la plus générale : confidentialité, autorisation, scellement ou signature, notamment par utilisation de "certificats", etc.

Dans ce cas, comme précédemment, le filtre 28 peut modifier en conséquence les paramètres de l'agent T₃, par utilisation d'une "*pdu*" particulière.

Pour fixer les idées, et à titre d'exemple non limitatif, il peut s'agir d'une conversion de format. Dans le cas de données audio, des données opaques, par exemple transmises codées selon le format "mp3", pourront être converties au format "wav" ou tout autre format accepté par le terminal 1. De même pour des données vidéo, des données opaques reçues au format "MPEG" pourront être converties au format "avi" ou tout autre format accepté par le terminal 1.

Dans tous les cas, seul un flux de données de faible volume et de faible débit, constituant les données dites critiques, transite par la carte à puce 2*a.* Seules ces données sont nécessaires pour sélectionner un filtre approprié qui contrôlera ensuite le transit des données du flux opaque dans le terminal et leur traitement, via les agents T₁ et T₂ et éventuellement T₃.

En d'autres termes, grâce aux dispositions propres à l'invention, transformant la carte à puce en client/serveur "WEB", d'une part, et permettant de réaliser un "proxy" directement dans celle-ci, d'autre part, la carte à puce devient capable de déléguer le traitement d'un flux d'informations, dont la quantité est fixée, au terminal auquel elle est connectée. Il s'ensuit que des flux globaux, présentant un très fort débit, peuvent tout de même être traités par un terminal à carte à puce, grâce à la mise en oeuvre de protocoles de communication dissymétriques, ce tout en conservant un degré maximal de sécurisation. Ce fort degré de sécurisation est dû au fait que les opérations essentielles de chiffrement et/ou d'authentification restent sous le contrôle exclusif de la carte à puce, les données dites critiques transitant par celle-ci.

A la lecture de ce qui précède, on constate aisément que l'invention atteint bien les buts qu'elle s'est fixés.

Il doit être clair cependant que l'invention n'est pas limitée aux seuls exemples de réalisations explicitement décrits, notamment en relation avec les figures 2 à 4, d'une part, et 6 à 8, d'autre part.

Il doit être clair également que le processus décrit est réversible : les transmissions entre un serveur et le terminal peuvent s'effectuer dans les deux sens. En effet, ce dernier peut aussi transmettre un fichier à haut débit au serveur distant, toujours sous le contrôle de la carte à puce. Dans ce cas, les données dites critiques sont fournies à la carte à puce par le terminal, après une phase éventuelles de négociation avec le serveur distant.

Enfin, bien que le procédé ait été décrit de façon détaillée dans le cas de la transmission d'un flux de données multimédias sécurisées à haut débit, le procédé selon l'invention, comme il a été précédemment indiqué, n'est en aucun cas limité à cette application particulière.

L'invention concerne aussi un procédé de transmission d'un flux de données, via un réseau de type Internet, entre au moins un serveur distant et un terminal muni d'un lecteur de carte à puce, ledit terminal comprenant des moyens de traitement d'information et des moyens de stockage d'information, les moyens de stockage d'information contenant au moins une application de type dit "client TCP/IP", la carte à puce comprenant des moyens de traitement d'information et des moyens de stockage d'information, ledit terminal et ledit serveur étant tous deux connectés au dit réseau de type Internet, caractérisé en ce qu'il comprend au moins les phases suivantes :
a/ une première phase consistant à implanter, dans les moyens de stockage d'information de ladite carte à puce (2*a*), une première pièce de logiciel (23*a*), formant une couche protocolaire de communication spécifique ;
b/ une deuxième phase consistant à implanter, dans les moyens de stockage d'information dudit terminal (1), une seconde pièce de logiciel (13), formant une couche protocolaire de communication spécifique et formant interface avec au moins ladite application de type "TCP/IP" (10) ;
   - en ce que lesdites première et seconde pièces de logiciel (13, 23*a*) comprennent chacune en outre au moins une première entité logicielle autonome (T₂, S₁), de type dit client, et une deuxième entité logicielle autonome (T₁, S₂), de type dit serveur, lesdites entités (T₁, S₁, T₂, S₂) coopérant, grâce auxdits moyens de traitement d'information du terminal et de la carte à puce, de manière à permettre l'établissement de sessions d'échanges de données bidirectionnels entre ledit terminal (1) et ladite carte à puce (2*a*) et de manière à ce que ladite carte à puce (2*a*) offre les fonctionnalités d'un client/serveur de type "WEB", et à permettre l'établissement d'une session d'échanges de données bidirectionnels entre ledit terminal (1) et un desdits serveurs distants (4), via ledit réseau de type Internet (*RI*), lesdites entités logicielles autonomes communiquant au moyen d'unités de données de protocole prédéterminées ;
   - en ce qu'il comprend une phase de réalisation, dans les moyens de stockage d'information de ladite carte à puce (2*a*), d'une pièce de logiciel applicative de caractéristiques fonctionnelles déterminées, dite « filtre » (28), recevant et/ou émettant des unités de données de protocole vers lesdites et/ou à partir desdites première et deuxième entités logicielles autonomes (S₂, S₁), de types respectifs client et serveur, comprises dans ladite seconde pièce de logiciel spécifique (23*a*), la réalisation de ladite pièce applicative étant sous le contrôle de ladite entité logicielle autonome de type serveur (S₁) ;
   - et en ce que ledit filtre (28) coopère avec lesdites entités logicielles autonomes (S₂, S₁) de ladite seconde pièce de logiciel spécifique (23*a*), grâce auxdits moyens de traitement d'information de la carte à puce, pour ouvrir une session avec lesdites entités logicielles autonomes (T₂, T₁) de ladite première pièce de logiciel spécifique (13), pour modifier des caractéristiques prédéterminées dudit flux de données transmis entre ledit terminal (1) et ledit serveur distant (4).

## Revendications

1. Procédé de transmission d'un flux de données, via un réseau de type Internet, entre au moins un serveur distant et un terminal muni d'un lecteur de carte à puce, ledit terminal comprenant au moins une application de type dit "client TCP/IP", ledit terminal et ledit serveur étant tous deux connectés au dit réseau de type Internet, **caractérisé en ce qu'**il comprend au moins les phases suivantes :
a/ une première phase consistant à implanter, dans ladite carte à puce (2*a*), une première pièce de logiciel (23*a*), formant une couche protocolaire de communication spécifique ;
b/ une deuxième phase consistant à implanter, dans ledit terminal (1), une seconde pièce de logiciel (13), formant une couche protocolaire de communication spécifique et formant interface avec au moins ladite application de type "TCP/IP" (10) ;
- **en ce que** lesdites première et seconde pièces de logiciel (13, 23*a*) comprennent chacune en outre au moins une première entité logicielle autonome (T₂, S₁), de type dit client, et une deuxième entité logicielle autonome (T₁, S₂), de type dit serveur, lesdites entités (T₁, S₁, T₂, S₂) coopérant de manière à permettre l'établissement de sessions d'échanges de données bidirectionnels entre ledit terminal (1) et ladite carte à puce (2*a*) et de manière à ce que ladite carte à puce (2*a*) offre les fonctionnalités d'un client/serveur de type "WEB", et à permettre l'établissement d'une session d'échanges de données bidirectionnels entre ledit terminal (1) et un desdits serveurs distants (4), via ledit réseau de type Internet (*RI*), lesdites entités logicielles autonomes communiquant au moyen d'unités de données de protocole prédéterminées ;
- **en ce qu**'il comprend une phase de réalisation, dans ladite carte à puce (2*a*), d'une pièce de logiciel applicative de caractéristiques fonctionnelles déterminées, dite « filtre » (28), recevant et/ou émettant des unités de données de protocole vers lesdites et/ou à partir desdites première et deuxième entités logicielles autonomes (S₂, S₁), de types respectifs client et serveur, comprises dans ladite seconde pièce de logiciel spécifique (23*a*), la réalisation de ladite pièce applicative étant sous le contrôle de ladite entité logicielle autonome de type serveur (S₁) ;
- et **en ce que** ledit filtre (28) coopère avec lesdites entités logicielles autonomes (S₂, S₁) de ladite seconde pièce de logiciel spécifique (23*a*) pour ouvrir une session avec lesdites entités logicielles autonomes (T₂, T₁) de ladite première pièce de logiciel spécifique (13), pour modifier des caractéristiques prédéterminées dudit flux de données transmis entre ledit terminal (1) et ledit serveur distant (4).

2. Procédé selon la revendication 1, **caractérisé en ce que** lesdites entités logicielles autonomes sont constituées par des agents intelligents (T₂, T₁, S₂, S₁).

3. Procédé selon la revendication 2, **caractérisé en ce que** chacun desdits agents intelligents (T₂, T₁, S₂, S₁) est associé à au moins l'une des six propriétés suivantes :
- "hôte" : agent intelligent localisé dans ledit terminal (1) ;
- "carte" : agent intelligent localisé dans ladite carte à puce (2*a*) ;
- "local" : agent intelligent ne communiquant pas avec ledit réseau (*RI*) ;
- "réseau" : agent intelligent communiquant avec ledit réseau (*RI*) ;
- "client" : agent intelligent qui initialise une desdites sessions ; et
- "serveur" : agent intelligent qui reçoit une demande pour une desdites sessions.

4. Procédé selon la revendication 3, **caractérisé en ce que** lesdits agents (T₂, T₁, S₂, S₁) sont identifiés par des identificateurs comprenant des nombres entiers, **en ce que** lesdits agents intelligents de type serveur (T₂, S₁) sont associés à ladite caractéristique "serveur" et sont identifiés par une référence fixe, et **en ce que** lesdits agents intelligents de type client (T₁, S₂) sont associés à ladite caractéristique "client" et sont identifiés par une référence variable, changeant d'une desdites sessions à la suivante, des instances desdits agents intelligents de type client étant créées lors de ces sessions.

5. Procédé selon la revendication 4, **caractérisé en ce que** lesdites unités de données de protocole comprennent un desdits identificateurs, une entité dite drapeau précisant sa nature, et des données optionnelles échangées entre lesdits agents intelligents (T₂, T₁, S₂, S₁).

6. Procédé selon la revendication 5, **caractérisé en ce que** lesdits drapeaux peuvent prendre au moins l'un des trois états suivants :
- "*OPEN*" (ouvert) indiquant l'ouverture d'une desdites sessions ;
- "*CLOSE*" (fermé) indiquant la fermeture d'une desdites sessions ; et
- "*BLOCK*" (verrouillé) indiquant qu'un desdits agents intelligents (T₂, T₁, S₂, S₁) est en attente d'une réponse d'un agent intelligent correspondant et reste inactif ;
et **en ce que** lesdites sessions prennent les trois états suivants :
- un état dit « déconnecté » lorsqu'aucune session n'est ouverte entre un desdits agents intelligents (T₂, T₁, S₂, S₁) et un autre desdits agents intelligents ;
- un état dit « connecté » lorsqu'une session est ouverte avec un autre desdits agents intelligents (T₂, T₁, S₂, S₁), une session étant identifiée par une paire desdits identificateurs ; et
- un état dit « bloqué » lorsque l'un desdits agents intelligents (T₂, T₁, S₂, S₁) est connecté et attend une réponse d'un desdits agents intelligents avec lequel il est connecté.

7. Procédé selon la revendication 6, **caractérisé en ce que** les étapes d'établissement d'une desdites sessions entre deux desdits agents intelligents (T₂, T₁, S₂, S₁) comprennent les suivantes :
a/ création d'une nouvelle instance d'un desdits agents intelligents de type client (T₁, S₂), cet agent intelligent étant identifié par une desdites références variables, dite éphémère ;
b/ émission d'une desdites unités de données de protocole à destination d'un desdits agents de type serveur (T₂, S₁), identifié par une référence fixe déterminée, avec un drapeau positionné au dit état "*OPEN*";
c/ passage dudit agent intelligent de type client (T₁, S₂) à l'état connecté ou bloqué selon la valeur dudit drapeau "*BLOCK*"; et
d/ réception par ledit agent intelligent de type serveur (T₂, S₁) de ladite unité de données de protocole avec ledit drapeau positionné au dit état "*OPEN*" et passage audit état connecté ;
et **en ce que**, après ouverture de ladite session, lesdits deux agents intelligents connectés échangent des données via desdites unités de données de protocole.

8. Procédé selon la revendication 7, **caractérisé en ce que** les étapes de fermeture d'une desdites sessions entre deux desdits agents intelligents (T₂, T₁, S₂, S₁) comprennent les suivantes :
a/ émission par un desdits agents intelligents de type client (T₁, S₂) d'une desdites unités de données de protocole avec un drapeau audit état positionné "*CLOSE*", et comportant optionnellement des données ; et
b/ réception par ledit agent intelligent de type serveur connecté (T₂, S₁) de ladite unité de données de protocole et passage de ladite session audit état déconnecté.

9. Procédé selon la revendication 8, **caractérisé en ce que** ladite application de type "TCP/IP" présente dans le dit serveur comprend un navigateur de type "WEB" (10).

10. Procédé selon la revendication 9, **caractérisé en ce que** ladite première pièce de logiciel spécifique comprend un premier agent intelligent (T₁) associé auxdites propriétés « réseau », « client », « terminal », dit T₁, réalisant la fonction d'un serveur de type "TCP/IP", **en ce que** ladite seconde pièce de logiciel spécifique comprend un premier agent intelligent (S₁) associé auxdites propriétés "carte", "serveur" et "local", dit S₁, cet agent S₁ étant associé par une session audit premier agent intelligent T₁, **en ce que** lesdites caractéristiques fonctionnelles déterminées dudit filtre (28) sont fonction d'informations en provenance dudit premier agent intelligent T₁, **en ce que** ladite première pièce de logiciel spécifique comprend un deuxième agent intelligent (T₂) associé auxdites propriétés "terminal", "serveur" et "réseau", dit T₂, réalisant la fonction d'un client de type "TCP/IP", pour être connecté audit serveur distant (4) via ledit réseau de type Internet (*RI*), et **en ce que** ladite seconde pièce de logiciel spécifique (23*a*) comprend un deuxième agent intelligent (S₂) associé auxdites propriétés "carte", "client" et "local", dit S₂, une instance de cet agent intelligent S₂ étant créée à chacune des dites sessions de manière dynamique par ledit filtre (28) et cet agent S₂ ouvrant des sessions avec ledit deuxième agent intelligent T₂ et lui indiquant une adresse permettant de se connecter audit serveur distant (4), de manière à ce que lesdits agents intelligents (T₂, T₁, S₂, S₁) et ledit filtre (28) coopèrent pour former une fonction dite de "proxy TCP" (27) et contrôlent des échanges de données entre ledit serveur éloigné (4) et ledit client (10).

11. Procédé selon la revendication 10, **caractérisé en ce que** la création de ladite fonction "proxy TCP" (27) comprend les étapes suivantes :
a/ ouverture d'une connexion entre ledit client (10) et ledit agent intelligent T₁, et transmission par ledit navigateur de type "WEB" (10) d'une adresse "IP" déterminée de type "URL" provoquant un rebouclage sur ladite carte à puce (2*a*) et la création d'une session entre cet agent intelligent T₁ et ledit agent intelligent S₁, ladite adresse "IP" de type "URL" encapsulant une autre adresse "IP" de type "URL" identifiant un chemin menant à une entité comprise dans ledit serveur distant (4) ;
b/ détermination à partir d'unités de données de protocole échangées pendant ladite session entre lesdits agents intelligents T₁ et S₁ d'une fonction déterminée de filtre (28) et création dudit filtre (28) ;
c/ création par ledit filtre (28) d'une instance dudit agent intelligent S₂ et ouverture d'une session entre lesdits agents intelligents S₂ et T₂, et transmission, par une première unité de données de protocole, de données véhiculant ladite adresse "IP" encapsulée, ces données précisant le nom dudit serveur éloigné (4) et un numéro de port associé ;
d/ ouverture par ledit agent intelligent T₂ d'une connexion de type "TCP" avec ledit serveur distant (4), via ledit réseau de type Internet (*RI*) ; et
e/ contrôle subséquent des données émises par lesdits agents intelligents T₁ et T₂, de manière à opérer un traitement déterminé sur les données échangées entre ledit serveur éloigné (4) et ledit navigateur de type "WEB" (10).

12. Procédé selon la revendication 11, **caractérisé en ce que** desdites unités de données de protocole sont dites « de commande » et identifiées par un drapeau de valeur particulière, **en ce que** ces unités de données de protocole de commande sont traitées directement par lesdits agents intelligents destinataires (T₂, T₁, S₂, S₁), sans être transmises à d'autres agents intelligents, ni au dit réseau de type Internet (*RI*), et **en ce que** ces unités de données de protocole de commande indiquent à un premier agent intelligent une quantité de données à émettre et à un deuxième agent une quantité de données qu'il est autorisé à recevoir du premier agent intelligent, de manière à permettre des échanges de données entre agents intelligents hors desdites sessions.

13. Procédé selon la revendication 12, **caractérisé en ce que** ledit flux de données est un flux composite comprenant des données dites critiques devant être dérivées par ladite carte à puce (2*a*) pour y subir un premier traitement déterminé et des données dites opaques devant être transmises directement au dit terminal (1), lesdites données opaques subissant un deuxième traitement déterminé dans ledit terminal (1) sous le contrôle desdites données critiques agissant sur ledit filtre (28).

14. Procédé selon la revendication 13, **caractérisé en ce que** ledit deuxième traitement desdites données opaques est réalisé lors d'échanges de données hors des dites sessions entre agents intelligents (T₂, T₁, S₂, S₁).

15. Procédé selon la revendication 14, **caractérisé en ce que** ladite transmission de flux de données entre ledit navigateur de type "WEB" (10) et ledit serveur distant (4) s'effectue selon un protocole de communication dissymétrique et **en ce qu'**il comprend au moins les étapes successives suivantes :
a/ ouverture d'une connexion entre ledit navigateur de type "WEB" (10) et ledit agent intelligent T₁ et transmission par ledit navigateur de type "WEB" (10) d'une adresse "IP" déterminée de type "URL" provoquant un rebouclage sur ladite carte à puce (2*a*) et la création d'une session entre cet agent intelligent T₁ et ledit agent intelligent S₁, ladite adresse "IP" de type "URL" encapsulant une autre adresse "IP" de type "URL" identifiant un chemin menant à une entité comprise dans ledit serveur distant (4) ;
b/ détermination à partir d'unités de données de protocole échangées pendant ladite session entre lesdits agents intelligents T₁ et S₁ d'une fonction déterminée de filtre (28) et création dudit filtre (28) ;
c/ création par ledit filtre d'une instance dudit agent intelligent S₂ et ouverture d'une session entre lesdits agents intelligents S₂ et T₂, et transmission, par une première unité de données de protocole, de données véhiculant ladite adresse "IP" encapsulée, ces données précisant le nom dudit serveur éloigné (4) et un numéro de port associé, et transmission à celui-ci d'une requête de type "http" ;
d/ échanges de données dites critiques particulières entre ledit serveur distant (4) et ledit filtre (28) par l'intermédiaire de ladite session ouverte entre lesdits agents intelligents S₂ et T₂ ;
e/ en fonction d'un résultat prédéterminé d'un traitement desdites données critiques particulières par ledit filtre (28), envoi d'une unité de données de protocole dite de commande au dit agent intelligent T₂ autorisant celui-ci à recevoir des données émises hors session par ledit agent T₁, les données échangées subséquemment entre ledit serveur distant (4) et ledit navigateur de type "WEB" (10) constituant lesdites données opaques et étant relayées directement par lesdits agents intelligents T₁ et T₂ , sans traverser ladite carte à puce (2*a*) ; et
f/ lors de la détection d'un ordre de déconnexion "TCP", émission par l'un desdits agents intelligents T₁ ou T₂ d'une unité de données de protocole associée avec un drapeau au dit état *"CLOSE"* en direction de l'un desdits agents intelligents S₁ ou S₂, de manière à ce que ledit filtre (28) supervise une fermeture desdites sessions entre lesdits agents intelligents T₁ et S₁, d'une part, et lesdits agents intelligents T₂ et S₂, d'autre part.

16. Procédé selon la revendication 15, **caractérisé en ce que** ladite étape d/ comprend une procédure d'authentification se produisant entre ledit filtre (28) et ledit serveur distant (4), et **en ce que** ledit résultat prédéterminé de ladite étape e/ est la vérification du bon déroulement de ladite procédure d'authentification.

17. Procédé selon la revendication 16, **caractérisé en ce que** ledit filtre (28) est un filtre pour la mise en oeuvre dudit protocole sécurisé "SSL", **en ce qu'**il est fait usage d'un premier agent intelligent supplémentaire (T₃) de type serveur associé à une fonction de type "SSL", dit T₃, compris dans ladite première pièce de logiciel spécifique (13), et un deuxième agent intelligent supplémentaire (S₃) de type client, dit S₃, compris dans ladite seconde pièce de logiciel spécifique (23*a*), **en ce qu'**il comprend lesdites étapes a/ à d/ de manière à initier une négociation avec ledit serveur distant (4) et à sélectionner une paire de données de sécurité consistant en un algorithme de chiffrement et une fonction de hachage à sens unique, et des paramètres associés à ces données de sécurité, et à réaliser subséquemment les étapes suivantes :
1/ ouverture d'une session entre lesdits agents S₃ et T₃, ce dernier étant initialisé avec une valeur de clé de chiffrement et des valeurs courantes de ladite fonction de hachage ;
2/ envoi par ledit filtre (28) au dit agent intelligent T₂ d'une desdites unités de données de protocole de commande lui permettant de transmettre au dit serveur distant (4), via ledit réseau de type Internet (*RI*), des données émises hors session par ledit agent intelligent T₃ et de rediriger les données reçues du réseau de type Internet (*RI*) vers cet agent intelligent T₃ ;
3/ envoi par ledit filtre au dit agent intelligent T₃ d'une dite unité de données de protocole de commande lui permettant de recevoir des données émises hors session par lesdits agents intelligents T₁ et T₂ ;
4/ établissement d'un tunnel de transmissions, dans ledit terminal (1), au travers desdits agents intelligents T₁, T₃ et T₂ ; et
5/ lors de la fermeture d'une session qui lui est associée, par l'un desdits agents intelligents T₁ ou T₂, fermeture par ledit filtre (28) des autres sessions restant ouvertes.

## Claims

1. Method for transmission of a data flow, via an network of the Internet type, between at least one remote server and a terminal equipped with a chip card reader, said terminal comprising at least one application of the so-called "TCP/IP type", said terminal and said server both being connected to said network of the Internet type, **characterized in that** it comprises at least the following phases:
a) a first phase consisting of installing, in said chip card (2*a*), a first piece of software (23*a*), forming a specific communication protocol layer;
b) a second phase consisting of installing, in said terminal (1), a second piece of software (13), forming a specific communication protocol and forming an interface with said application of the "TCP/IP" type (10);
- **in that** said first and second pieces of software (13, 23*a*) each include at least one first autonomous software entity (T₂, S₁), of the so-called client type, and a second autonomous software entity (T₁, S₂), of the so-called server type, said entities (T₁, S₁, T₂, S₂) co-operating so as to allow the establishment of bidirectional data exchange sessions between said terminal (1) and said chip card (2*a*) and so that said chip card (2*a*) offers the features of a client/server of the "Web" type, and to allow the establishment of a bidirectional data exchange session between said terminal (1) and one of said remote servers (4), via said network of the Internet type (*RI*), said autonomous software entities communicating by means of data units of a predetermined protocol;
- **in that** it includes an implementation phase, in said chip card (2*a*), of a piece of application software with given functional characteristics, termed "filter" (28), receiving and/or sending protocol data units to said and/or from said first and second autonomous software entities (S₂, S₁), of respective client and server types, included in said second piece of specific software (23*a*), the implementation of said application piece being under the control of said autonomous software entity of the server type (S₁);
- and **in that** said filter (28) co-operates with said autonomous software entities (S₂, S₁) of said second piece of specific software (23*a*) in order to open a session with said autonomous software entities (T₂, T₁) of said first piece of specific software (13), in order to modify the predetermined characteristics of said data flow transmitted between said terminal (1) and said remote server (4).

2. Method in accordance with claim 1, **characterized in that** said autonomous software entities are constituted by intelligent agents (T₂, T₁, S₂, S₁).

3. Method in accordance with claim 2, **characterized in that** each of said intelligent agents (T₂, T₁, S₂, S₁) is associated to at least one of the six following properties:
- "host": intelligent agent located in said terminal (1);
- "card": intelligent agent located in said chip card (2*a*);
- "local": intelligent agent not communicating with said network (*RI*);
- "network": intelligent agent communicating with said network (*RI*);
- "client": intelligent agent which initializes one of said sessions; and
- "server": intelligent agent which receives a request for one of said sessions.

4. Method in accordance with claim 3, **characterized in that** said agents (T₂, T₁, S₂, S₁) are identified by identifiers comprising integer numbers, in which said intelligent agents of the server type (T₂, S₁) are associated to said "server" characteristic and are identified by a fixed reference, and in which said intelligent agents of the client type (T₁, S₂) are associated to said "client" characteristic and are identified by a variable reference, changing from one of said sessions to the next, instances of said intelligent agents of the client type being created during these sessions.

5. Method in accordance with claim 4, **characterized in that** said protocol data units comprise one of said identifiers, a so-called "flag" entity specifying its nature, and optional data exchanged between said intelligent agents (T₂, T₁, S₂, S₁).

6. Method in accordance with claim 5, **characterized in that** said flags can take at least one of the following three states:
- "*OPEN*" (open) indicating the opening of one of said sessions;
- "*CLOSE*" (closed) indicating the closing of one of said sessions; and
- "*BLOCK*" (locked) indicating that one of said intelligent agents (T₂, T₁, S₂, S₁) is awaiting a response from a corresponding intelligent agent and remains inactive;
and **in that** said sessions take the following three states:
- a so-called "disconnected" state when no session is open between one of said intelligent agents (T₂, T₁, S₂, S₁) and another of said intelligent agents;
- a so-called "connected" state when a session is open with another of said intelligent agents (T₂, T₁, S₂, S₁), a session being identified by a pair of said identifiers; and
- a so-called "blocked" state when one of said intelligent agents (T₂, T₁, S₂, S₁) is connected and is awaiting a response from one of said intelligent agents with which it is connected.

7. Method in accordance with claim 6, **characterized in that** the steps for establishing one of said sessions between two of said intelligent agents (T₂, T₁, S₂, S₁) comprise the following:
a) creation of a new instance of one of said intelligent agents of the client type (T₁, S₂), this intelligent agent being identified by one of said variable references, termed ephemeral;
b) transmission of one of said protocol data units addressed to one of said agents of the server type (T₂, S₁), identified by a given fixed reference, with a flag set to said "*OPEN*" state;
c) passage of said intelligent agent of the client type (T₁, S₂) to the connected or blocked state in accordance with the value of said "*BLOCK*" flag; and
d) reception by said intelligent agent of the server type (T₂, S₁) of said protocol data unit with said flag set to the so-called "*OPEN*" state and passage to said connected state;
and **in that,** after opening said session, said two connected intelligent agents exchange data via said protocol data units.

8. Method in accordance with claim 7, **characterized in that** the steps for closing one of said sessions between said two intelligent agents (T₂, T₁, S₂, S₁) comprise the following:
a) transmission by one of said intelligent agents of the client type (T₁, S₂) of one of said protocol data units with a flag set to said "*CLOSE*" state, and optionally including data; and
b) reception by said intelligent agent of the connected server type (T₂, S₁) of said protocol data unit and passage from said session to said disconnected state.

9. Method in accordance with claim 8, **characterized in that** said application of the "TCP/IP" type present in said server includes a browser of the "Web" type (10).

10. Method in accordance with claim 9, **characterized in that** said first piece of specific software includes a first intelligent agent (T₁) associated to said properties "network", "client" and "terminal", so-called T₁ implementing the function of a server of the "TCP/IP" type, in which said second piece of specific software includes a first intelligent agent (S₁) associated to said properties "card", "server" and "local", termed S₁, this agent S₁ being associated by a session to said first intelligent agent T₁, in which said given functional characteristics of said filter (28) are a function of the information emanating from said first intelligent agent T₁, **in that** said first piece of specific software includes a second intelligent agent (T₂) associated to said properties "terminal", "server" and "network", termed T₂, implementing the function of a client of the "TCP/IP" type, in order to be connected to said remote server (4) via said network of the Internet type (*RI*), and **in that** said second piece of specific software (23*a*) includes a second intelligent agent (S₂) associated to said properties "card", "client" and "local", termed S₂, an instance of said intelligent agent S₂ being created for each of said sessions in a dynamic manner by said filter (28) and this agent S₂ opening sessions with said second intelligent agent T₂ and indicating to it an address permitting it to be connected to said remote server (4), in order that intelligent agents (T₂, T₁, S₂, S₁) and said filter (28) cooperate to form a function termed "proxy TCP" (27) and control data exchanges between said remote server (4) and said client (10).

11. Method in accordance with claim 10, **characterized in that** the creation of said "proxy TCP" function (27) includes the following steps:
a) opening of a connection between said client (10) and said intelligent agent T₁, and transmission by said browser of the "Web" type (10) of a given "IP" address of the "URL" type triggering a loop test on said chip card (2*a*) and the creation of a session between this intelligent agent T₁ and said intelligent agent S₁, said IP address of the URL type encapsulating another IP address of the URL type identifying a path leading to an entity included in said remote server;
b) determination from protocol data units exchanged during said session between said intelligent agents T₁ and S₁ of a given filter (28) function and creation of said filter (28);
c) creation by said filter (28) of an instance of said intelligent agent S₂ and opening of a session between said intelligent agents S₁ and T₂, and transmission, by a first protocol data unit, of data conveying said encapsulated "IP" address, this data specifying the name of said remote server (4) and an associated port number;
d) opening by said intelligent agent T₂ of a connection of the "TCP" type with said remote server (4), via said network of the Internet type (*RI*); and
e) subsequent checking of the data sent by said intelligent agents T₁ and T₂, in order to operate a given process on the data exchanged between said remote server (4) and said browser of the "Web" type (10).

12. Method in accordance with claim 11, **characterized in that** said protocol data units are termed "control" and identified by a flag of a particular value, **in that** these control protocol data units are processed directly by said recipient intelligent agents (T₂, T₁, S₂, S₁), without being transmitted to other intelligent agents, nor to said network of the Internet type (*RI*), and **in that** these control protocol data units indicate to a first intelligent agent a quantity of data to be transmitted and to a second intelligent agent a quantity of data which it is authorised to receive from the first intelligent agent, in order to allow data exchanges between intelligent agents outside said sessions.

13. Method in accordance with claim 12, **characterized in that** said data flow is a composite flow comprising data termed critical which must be derived from said chip card (2*a*) in order there to undergo a given first process and data termed opaque which must be transmitted directly to said terminal (1), said opaque data undergoing a given second process in said terminal (1) under the control of said critical data acting on said filter (28).

14. Method in accordance with claim 13, **characterized in that** said second processing of said opaque data is effected during data exchanges outside said sessions between intelligent agents (T₂, T₁, S₂, S₁).

15. Method in accordance with claim 14, **characterized in that** said data flow transmission between said browser of the "Web" type (10) and said remote server (4) is implemented in accordance with a dissymmetrical communication protocol and **in that** it comprises at least the following successive steps:
a) opening of a connection between said browser of the "Web" type (10) and said intelligent agent T₁ and transmission by said browser of the "Web" type (10) of a given "IP" address of the "URL" type triggering a loop test on said chip card (2*a*) and the creation of a session between this intelligent agent T₁ and said intelligent agent S₁, said "IP" address of the "URL" type encapsulating another "IP" address of the "URL" type identifying a path leading to an entity included in said remote server (4);
b) determination from protocol data units exchanged during said session between said intelligent agents T₁ and S₁ of a given filter (28) function and creation of said filter (28);
c) creation by said filter of an instance of said intelligent agent S₂ and opening of a session between said intelligent agents S₂ and T₂, and transmission, by a first protocol data unit, of data conveying said encapsulated "IP" address, this data specifying the name of said remote server (4) and an associate port number, and transmission to the former of a request of the "http" type;
d) particular data exchanges termed critical between said remote server (4) and said filter (28) by means of said session opened between said intelligent agents S₂ and T₂;
e) according to a predetermined result from a processing of said particular critical data by said filter (28), sending of a protocol data unit termed control to said intelligent agent T₂ authorizing the latter to receive data transmitted outside the session by said agent T₁, the data exchanged subsequently between said remote server (4) and said browser of the "Web" type (10) constituting said opaque data and being relayed directly by said intelligent agents T₁ and T₂, without traversing said chip card (2*a*); and
f) at the time of detection of a "TCP" disconnection order, transmission by one of said intelligent agents T₁ or T₂ of a protocol data unit associated with a flag at said "*CLOSE*" state in the direction of one of said intelligent agents S₁ or S₂ in order that said filter (28) supervises a closing of said sessions between said intelligent agents T₁ and S₁, on one hand, and said intelligent agents T₂ and S₂, on the other hand.

16. Method in accordance with claim 15, **characterized in that** said step d) comprises an authentication procedure being produced between said filter (28) and said remote server (4), and **in that** said predetermined result from said step e) is the confirmation of correct execution of said authentication procedure.

17. Method in accordance with claim 16, **characterized in that** said filter (28) is a filter for the implementation of said "SSL" securitized protocol, **in that** use is made of a first supplementary intelligent agent (T₃) of the server type associated to a function of the "SSL" type, termed "T₃" included in said first specific piece of software (13), and a second supplementary intelligent agent (S₃) of the client type, termed S₃, included in said second specific piece of software (23*a*) **in that** it includes said steps a) to d) in order to initiate a negotiation with said remote server (4) and to select a security data pair consisting of a ciphering algorithm and a one way hashing function, and parameters associated to this security data, and subsequently to implement the following steps:
1) opening of a session between said agents S₃ and T₃, this latter being initialized with a ciphering key value and the current values of said hashing function;
2) sending by said filter (28) to said intelligent agent T₂ of one of said control protocol data units allowing it to transmit to said remote server (4) via said network of the Internet type (*RI*), data transmitted outside the session by said intelligent agent T₃ and to redirect data received from the network of the Internet type (*RI*) to this intelligent agent T₃;
3) sending by said filter to said intelligent agent T₃ and of a said control protocol data unit allowing it to receive data transmitted outside the session by said intelligent agents T₁ and T₂;
4) establishment of a transmission tunnel, in said terminal (1), through said intelligent agents T₁, T₃ and T₂; and
5) at the time of closing a session which is associated to it, by one of said intelligent agents T₁ or T₂, closing by said filter (28) of the other sessions remaining open.

## Patentansprüche

1. Übertragungsverfahren für einen Datenstrom über ein Netzwerk des Typs Internet zwischen mindestens einem dezentralen Server und einem Terminal, der mit einem Lesegerät für eine Chipkarte ausgestattet ist, wobei der Server mindestens eine Anwendung des Typs "Client TCP/IP" umfasst und der Terminal und der Server beide mit dem Netzwerk des Typs Internet verbunden sind, **dadurch gekennzeichnet, dass** es mindestens folgende Phasen umfasst:
a/ eine erste Phase, die daraus besteht, in die Chipkarte (2a) ein erstes Softwareteil (23a) einzufügen, das eine spezifische Kommunikationsprotokollschicht bildet;
b/ eine zweite Phase, die daraus besteht, in den Terminal (1) ein zweites Softwareteil (13) einzufügen, das eine spezifische Kommunikationsprotokollschicht bildet und eine Schnittstelle mit mindestens der Anwendung des Typs "TCP/IP" (10) bildet;
- **dass** das erste und zweite Softwareteil (13, 23a) jeweils mindestens eine erste autonome Softwareeinheit (T₂, S₁) des Typs Client und eine zweite autonome Softwareeinheit (T₁, S₂) des Typs Server umfasst und die Einheiten (T₁, S₁, T₂, S₂) so zusammenarbeiten, dass eine Sitzung zum Zweiwegeaustausch von Daten zwischen dem Terminal (1) und der Chipkarte (2a) eingerichtet werden kann und die Chipkarte (2a) die Funktionen eines Client/Servers des Typs "WEB" bietet und die Einrichtung von Sitzungen zum Zweiwegeaustausch von Daten zwischen dem Terminal (1) und einem der dezentralen Server (4) über das Netzwerk des Typs Internet (RI) ermöglicht, wobei die autonomen Softwareeinheiten mittels vorherbestimmter Protokoll-Dateneinheiten kommunizieren;
- **dass** es eine Umsetzungsphase in der Chipkarte (2a) eines Anwendungssoftwareteils mit bestimmten Funktionsmerkmalen, "Filter" (28) genannt umfasst, der Protokoll-Dateneinheiten von der und/oder an die erste und zweite unabhängige Softwareeinheit (S₂, S₁) des Typs Client bzw. Server empfängt und/oder versendet, die das zweite spezifische Softwareteil (23a) umfasst, wobei die Umsetzung des Anwendungsteils unter Kontrolle der autonomen Softwareeinheit des Typs Server (S₁) erfolgt;
- **dass** der Filter (28) mit den autonomen Softwareeinheiten (S₂, S₁) des zweiten spezifischen Softwareteils (23a) zusammenarbeitet, um eine Sitzung mit den autonomen Softwareeinheiten (T₂, T₁) des ersten spezifischen Softwareteils (13) zu öffnen, um die vorherbestimmten Merkmale des zwischen Terminal (1) und dezentralem Server (4) übermittelten Datenstroms zu ändern.

2. Verfahren gemäß Anspruch 1, **dadurch gekennzeichnet, dass** die autonomen Softwareeinheiten aus intelligenten Agenten (T₂, T₁, S₂, S₁) bestehen.

3. Verfahren gemäß Anspruch 2, **dadurch gekennzeichnet, dass** jeder der intelligenten Agenten (T₂, T₁, S₂, S₁) mit mindestens einer der folgenden sechs Eigenschaften in Verbindung gebracht wird:
- "Host": intelligenter Agent im Terminal (1);
- "Karte": intelligenter Agent in der Chipkarte (2a);
- "lokal": intelligenter Agent, der nicht mit dem Netzwerk (RI) kommuniziert;
- "Netzwerk": intelligenter Agent, der mit dem Netzwerk (RI) kommuniziert;
- "Client": intelligenter Agent, der eine der Sitzungen öffnet; und
- "Server": intelligenter Agent, der eine Anfrage für eine der Sitzungen empfängt.

4. Verfahren gemäß Anspruch 3, **dadurch gekennzeichnet, dass** die Agenten (T₂, T₁, S₂, S₁) durch Identifikatoren identifiziert werden, die ganze Zahlen umfassen, dass die intelligenten Agenten des Typs Server (T₂, S₁) mit dem "Server"-Merkmal in Verbindung gebracht werden und durch einen unveränderlichen Bezug identifiziert werden und, dass die intelligenten Agenten des Typs Client (T₁, S₂) mit dem Merkmal "Client" in Verbindung gebracht werden und durch veränderlichen Bezug identifiziert werden, der sich von einer Sitzung zur anderen verändert, wobei während dieser Sitzungen Instanzen der intelligenten Agenten geschaffen werden.

5. Verfahren gemäß Anspruch 4, **dadurch gekennzeichnet, dass** die Protokoll-Dateneinheiten einen der Identifikatoren umfassen, eine Flagge genannte Einheit, die ihre Art näher bezeichnet, und optionale zwischen den intelligenten Agenten ausgetauschte Daten (T₂, T₁, S₂, S₁).

6. Verfahren gemäß Anspruch 5, **dadurch gekennzeichnet, dass** die Flaggen mindestens einen der drei folgenden Zustände einnehmen können:
- "OPEN" (offen) bezeichnet die Eröffnung einer Sitzung;
- "CLOSE" (geschlossen) bezeichnet das Schließen einer Sitzung; und
- "BLOCK" (verriegelt) bezeichnet, dass einer der intelligenten Agenten (T₂, T₁, S₂, S₁) auf die Antwort des entsprechenden intelligenten Agenten wartet und inaktiv bleibt;
**dass** die Sitzungen einen der drei folgenden Zustände einnehmen:
- einen "nicht verbunden" genannten Zustand, wenn zwischen einem der intelligenten Agenten (T₂, T₁, S₂, S₁) und einem anderen intelligenten Agenten keine Sitzung geöffnet ist;
- einen "verbunden" genannten Zustand, wenn eine Sitzung mit einem anderen der intelligenten Agenten (T₂, T₁, S₂, S₁) geöffnet ist, wobei eine Sitzung durch ein Paar der Identifikatoren **gekennzeichnet** wird; und
- einen "blockiert" genannten Zustand, wenn einer der intelligenten Agenten (T₂, T₁, S₂, S₁) verbunden ist und die Antwort eines der intelligenten Agenten erwartet, mit dem er verbunden ist.

7. Verfahren gemäß Anspruch 6, **dadurch gekennzeichnet, dass** die Einrichtungsphasen einer der Sitzungen zwischen zwei der intelligenten Agenten (T₂, T₁, S₂, S₁) Folgendes umfassen:
a/ Einrichtung einer neuen Instanz eines der intelligenten Agenten des Typs Client ((T₁, S₂), wobei dieser intelligente Agent durch die veränderbaren, vorübergehend genannten Bezüge identifiziert wird;
b/ Senden einer der Protokoll-Dateneinheiten an einen der Agenten des Typs Server (T₂, S₁), der durch einen festgelegte unveränderbaren Bezug identifiziert wird, mit einer Flagge, die im Zustand *"OPEN"* positioniert ist;
c/ Übergang des intelligenten Agenten des Typs Client (T₁, S₂) in den Zustand verbunden oder blockiert, je nach Wert der Flagge *"BLOCK"*; und
d/ Empfang der Protokoll-Dateneinheit mit der Flagge im Zustand *"OPEN"* durch den intelligenten Agenten des Typs Server (T₂, S₁) und Übergang in den verbundenen Zustand;
und, **dass** nach Eröffnung der Sitzung die beiden verbundenen intelligenten Agenten Daten über die Protokoll-Dateneinheiten austauschen.

8. Verfahren gemäß Anspruch 7, **dadurch gekennzeichnet, dass** die Phasen zum Schließen einer Sitzung zwischen zwei intelligenten Agenten (T₂, T₁, S₂, S₁) Folgendes umfassen:
1/ Versand einer der Protokoll-Dateneinheiten, die wahlweise Daten umfassen kann, mit einer Flagge im Zustand "*CLOSE*" durch einen der intelligenten Agenten des Typs Client (T₁, S₂); und
2/ Empfang dieser Protokoll-Dateneinheit durch den intelligenten Agenten des Typs verbundener Server (T₂, S₁) und Übergang der Sitzung in den nicht verbundenen Zustand.

9. Verfahren gemäß Anspruch 8, **dadurch gekennzeichnet, dass** die Anwendung des Typs "TCP/IP" im Server einen Browser des Typs "WEB" (10) umfasst.

10. Verfahren gemäß Anspruch 9, **dadurch gekennzeichnet, dass** das erste spezifische Softwareteil einen ersten intelligenten Agenten (T₁) umfasst, der mit den Eigenschaften "Netzwerk", "Client", "Terminal", genannt T₁ in Verbindung gebracht wird, der die Funktion eines Servers vom Typ "TCP/IP" übernimmt, dass das zweite spezifische Softwareteil einen ersten intelligenten Agenten (S₁) umfasst, der mit den Eigenschaften "Karte", "Server" und "lokal", S₁ genannt, in Verbindung gebracht wird und dieser Agent S₁ durch eine Sitzung mit dem ersten intelligenten Agenten T₁ verbunden wird, dass die festgelegten funktionellen Merkmale des Filters (28) von den Informationen des ersten intelligenten Agenten T₁ abhängen, dass das erste spezifische Softwareteil einen zweiten intelligenten Agenten (T₂) umfasst, der mit den Eigenschaften "Terminal", "Server" und "Netzwerk", genannt T₂ in Verbindung gebracht wird und die Funktion eines Client des Typs "TCP/IP" erfüllt, um über das Netzwerk des Typs Internet (RI) mit dem dezentralen Server (4) verbunden zu werden und, dass das zweite spezifische Softwareteil (23a) einen zweiten intelligenten Agenten (S₂) umfasst, der mit den Eigenschaften "Karte", "Client" und "local", genannt S₂, in Verbindung gebracht wird, wobei eine Instanz dieses intelligenten Agenten S₂ bei jeder der Sitzungen über den Filter (28) dynamisch geschaffen wird und dieser Agent S₂ Sitzungen mit dem zweiten intelligenten Agenten T₂ öffnet und diesem eine Adresse angibt, über die man sich mit dem dezentralen Server (4) verbinden kann, so dass die intelligenten Agenten (T₂, T₁, S₂, S₁) und der Filter (28) zusammenarbeiten, um eine Funktion genannt "proxy TCP" (27) zu bilden und den Datenaustausch zwischen dem dezentralen Server (4) und dem Client (10) kontrollieren.

11. Verfahren gemäß Anspruch 10, **dadurch gekennzeichnet, dass** die Einrichtung der "proxy TCP" Funktion (27) folgende Phasen umfasst:
a/ Eröffnung einer Verbindung zwischen dem Client (10) und dem intelligenten Agenten T₁ und Übertragung einer bestimmten "IP" Adresse des Typs "URL" durch den Browser des Typs "WEB", die zu einer Schleifenverbindung auf der Chipkarte (2a) und der Einrichtung einer Sitzung zwischen dem intelligenten Agenten T₁ und dem intelligenten Agenten S₁ führt, wobei die "IP" Adresse des Typs "URL" eine weitere "IP"-Adresse des Typs "URL" einkapselt, die einen Pfad zu einer in dem dezentralen Server (4) enthaltenen Einheit festlegt;
b/ Auf der Grundlage der während der Sitzung zwischen den intelligenten Agenten T₁ und S₁ ausgetauschten Protokoll-Dateneinheiten Festlegung einer festgelegten Filterfunktion (28) und Einrichtung des Filters (28);
c/ Einrichtung einer Instanz des intelligenten Agenten S₂ durch den Filter (28) und Eröffnung einer Sitzung zwischen den intelligenten Agenten S₂ und T₂ und Übertragung von Daten, die die eingekapselte "IP"-Adresse transportieren, durch eine erste Protokoll-Dateneinheit, wobei diese Daten den Namen des dezentralen Servers (4) und einen damit verbundenen Port angeben;
d/ Eröffnung einer Verbindung des Typs "TCP" durch den intelligenten Agenten T₂ mit den dezentralen Server (4) über das Netzwerk vom Typ Internet (RI); und
e/ Anschließende Kontrolle der von den intelligenten Agenten T₁ und T₂ versandten Daten, um eine festgelegte Bearbeitung der Daten, die zwischen dem dezentralen Server (4) und dem Browser des Typs "WEB" (10) ausgetauscht werden, durchzuführen.

12. Verfahren gemäß Anspruch 11, **dadurch gekennzeichnet, dass** die Protokoll-Dateneinheiten "Befehls-PDU" genannt und durch eine Flagge mit besonderem Wert identifiziert werden, dass diese Befehls-PDU direkt von den intelligenten Empfängeragenten (T₂, T₁, S₂, S₁) bearbeitet werden, ohne an andere intelligente Agenten oder an ein Netzwerk des Typs Internet (RI) gesandt zu werden und, **dass** diese Befehls-PDU einem ersten intelligenten Agenten eine auszugebende Datenmenge angeben und einem zweiten Agenten eine Datenmenge angeben, die er von dem ersten intelligenten Agenten empfangen darf, so dass zwischen den intelligenten Agenten außerhalb der Sitzungen ein Datenaustausch stattfinden kann.

13. Verfahren gemäß Anspruch 12, **dadurch gekennzeichnet, dass** es sich bei dem Datenstrom um einen zusammengesetzten Datenstrom handelt, der sog. kritische Daten umfasst, die von der Chipkarte (2a) abzuleiten sind, um dort eine erste festgelegte Bearbeitung zu erfahren und sog. verschlüsselten Daten, die direkt an den Terminal (1) zu übermitteln sind, wobei die verschlüsselten Daten im Terminal (1) eine zweite festgelegte Bearbeitung unter Kontrolle der kritischen, auf den Filter (28) wirkenden Daten erfahren.

14. Verfahren gemäß Anspruch 13, **dadurch gekennzeichnet, dass** die Bearbeitung der verschlüsselten Daten bei Datenaustausch außerhalb der Sitzungen der intelligenten Agenten (T₂, T₁, S₂, S₁) stattfindet.

15. Verfahren gemäß Anspruch 14, **dadurch gekennzeichnet, dass** die Übertragung des Datenstroms zwischen dem Browser des Typs "WEB" (10) und dem dezentralen Server (4) nach einem unsymmetrischen Kommunikationsprotokoll verläuft und mindestens folgende aufeinanderfolgende Phasen umfasst:
a/ Eröffnung einer Verbindung zwischen dem Browser des Typs "WEB" (10) und dem intelligenten Agenten T₁ und Übertragung einer festgelegten "IP"-Adresse des Typs "URL" durch den Browser des Typs "WEB" (10), die zu einer Schleifenverbindung auf der Chipkarte (2a) und der Einrichtung einer Sitzung zwischen diesem intelligenten Agenten T₁ und dem intelligenten Agenten S₁ führt, wobei die "IP"-Adresse des Typs "URL" eine andere "IP"-Adresse des Typs "URL" einkapselt, die einen Pfad zu einer im dezentralen Server (4) enthaltenen Einheit angibt.
b/ Auf der Grundlage von während der Sitzung zwischen den intelligenten Agenten T₁ und S₁ ausgetauschten Protokoll-Dateneinheiten Festlegung einer festgelegten Filterfunktion (28) und Einrichtung des Filters (28);
c/ Einrichtung einer Instanz des intelligenten Agenten S₂ durch den Filter und Eröffnung einer Sitzung zwischen den intelligenten Agenten S₂ und T₂ und Übertragung von Daten, die die eingekapselte "IP"-Adresse transportieren durch eine erste Protokoll-Dateneinheit, wobei diese Daten den Namen des dezentralen Servers (4) und eine damit verbundene Port-Nummer angeben und Übertragung einer Anfrage des Typs "http" an diesen.
d/ Austausch sog. besonderer kritischer Daten zwischen dem dezentralen Server (4) und dem Filter (28) über die offne Sitzung zwischen den intelligenten Agenten S₂ und T₂;
e/ Je nach einem vorherbestimmten Ergebnis der Bearbeitung der besonderen kritischen Daten durch den Filter (28) Versand einer sog. Befehls-PDU an den intelligenten Agenten T₂, die diesem genehmigt, von dem Agenten T₁ außerhalb einer Sitzung Daten zu empfangen, wobei die anschließend zwischen dem dezentralen Server (4) und dem Browser des Typs "WEB" (10) ausgetauschten Daten diese verschlüsselten Daten darstellen und direkt von den intelligenten Agenten T₁ und T₂ übertragen werden, ohne über die Chipkarte (2a) zu laufen; und
f/ Wenn ein Befehl zur "TCP"-Verbindungsunterbrechung festgestellt wird, Versand einer Protokoll-Dateneinheit mit einer Flagge im Zustand "*CLOSE*" durch einen der intelligenten Agenten T₁ oder T₂ an einen der intelligenten Agenten S₁ oder S₂, so dass der Filter (28) die Schließung der Sitzungen der intelligenten Agenten T₁ und S₁ einerseits und den intelligenten Agenten T₂ und S₂ andererseits überwacht.

16. Verfahren gemäß Anspruch 15, **dadurch gekennzeichnet, dass** die Phase d/ eine Authentifizierungsphase zwischen dem Filter (28) und dem dezentralen Server (4) umfasst und, dass das vorherbestimmte Ergebnis der Phase e/ in der Überprüfung des korrekten Ablaufs des Authentifizierungsverfahrens besteht.

17. Verfahren gemäß Anspruch 16, **dadurch gekennzeichnet, dass** es sich bei dem Filter (28) um einen Filter für die Durchführung des Sicherheitsprotokolls "SSL" handelt, dass ein erster zusätzlicher intelligenter Agent (T₃) des Typs Server eingesetzt wird, der mit einer Funktion des Typs "SSL", T₃ genannt, verbunden wird, der im ersten spezifischen Softwareteil (13) enthalten ist und, dass ein zweiter zusätzlicher intelligenter Agent (S₃) des Typs Client, genannt S₃ eingesetzt wird, der im zweiten spezifischen Softwareteil (23a) enthalten ist, dass dieser die Phasen a/ bis d/ dahingehend umfasst, dass eine Verhandlung mit dem dezentralen Server (4) eingeleitet wird und ein Sicherheitsdatenpaar ausgewählt wird, dass aus einem Algorithmus zum Chiffrieren und einer Einwegefunktion zum Zerlegen und mit diesen Sicherheitsdaten verbundenen Parametern besteht und nacheinander folgende Phasen durchläuft:
1/ Eröffnung einer Sitzung der Agenten S₃ und T₃, wobei letzterer durch einen Chiffrierschlüsselwert und üblichen Werten der Zerlegefunktion initialisiert wird;
2/ Versand einer der Befehls-PDU durch den Filter (28) an den intelligenten Agenten T₂, die es ihm ermöglichen, dem dezentralen Server (4) über das Netzwerk des Typs Internet (IR) Daten zu senden, die außerhalb einer Sitzung von dem intelligenten Agenten T₃ ausgegeben wurden und Daten, die von dem Netzwerk des Typs Internet (RI) erhalten wurden, an diesen intelligenten Agenten T₃ weiterzuleiten;
3/ Versand einer Befehls-PDU durch den Filter an den intelligenten Agenten T₃, die diesem ermöglichen, Daten zu empfangen, die außerhalb einer Sitzung von den intelligenten Agenten T₁ und T₂ versandt werden;
4/ Einrichtung eines Übertragungstunnels im Terminal (1) über die intelligenten Agenten T₁ , T₃ und T₂ ; und
5/ Bei Schließung einer Sitzung, die mit ihm verbunden ist durch einen der intelligenten Agenten T₁ oder T₂ Schließung der anderen, offen gebliebenen Sitzungen durch den Filter (28).
